# EUROPEAN PATENT APPLICATION

(11) **EP 2 913 708 A1**
(43) Date of publication of application: **02.09.2015**
(21) Application number: 15156981.1
(22) Date of filing: 27.02.2015
(51) Int. Cl.: G02F 1/1335

(54) **Display device**

(30) Priority: 28.02.2014 JP 2014038092; 28.03.2014 JP 2014067720
(71) Applicant: Funai Electric Co., Ltd., Daito city Osaka 574-0013 (JP)
(72) Inventor: Horiuchi, Hirofumi, Osaka, Osaka 574-0013 (JP); Hayashi, Yuichi, Osaka, Osaka 574-0013 (JP)
(74) Representative: Osha Liang

(57) **Abstract**

A display device includes a display unit, a light source unit (5), a light guide plate (4) that includes an incident end surface (4a) and guides the light incident from the incident end surface to the display unit, a spacer portion (72) that separates the light source unit (5) and the light guide plate (4) by a predetermined distance at a predetermined interval, a heat sink (6) that holds the light source unit (5), and a rear frame (3) that supports the heat sink (6) so that the heat sink (6) is movable in a direction orthogonal to the incident end surface (4a) of the light guide plate (4).

## Description

### [Technical Field]

This invention relates generally to a display device and more particularly relates to a display device provided with a heat sink.

### [Background Art]

Conventional display devices comprise a heat sink (for example, see Patent Literature 1).

This Patent Literature 1 disclose that a display device comprising a display unit, a light source unit, and a light guide plate that includes an incident end surface and guides the light from the incident end surface to the display unit. Moreover, the display device comprises a spacer portion that separates the light source unit and the light guide plate by a predetermined distance at a predetermined interval, a connection unit that fixedly holds the light source unit, a heat sink to which the connection unit is fixedly installed, a biasing member that biases the heat sink to a light-guide-plate side, and a rear frame that supports the heat sink so that the heat sink is movable in a direction orthogonal to the incident end surface.

The heat sink is disposed on an outer side of the rear frame. The light source unit and the light guide plate are separated by the distance at the constant interval by the light source unit being biased by the biasing member to the light-guide-plate side. Therefore, according to the display device, even in a situation where the light guide plate expands or contracts due to heat, the connection unit and the heat sink of the display device move together with the light source unit and the light source unit and the light guide plate are separated by the distance at the constant interval. By separating the light source unit and the light guide plate by the distance at the constant interval by the spacer portion, an incidence amount of the light to the light guide plate is stabilized; therefore, a usage efficiency of the light improves.

### [Citation List]

### [Patent Reference]

[Patent Literature 1] JPA 2011-253769

However, in the display device of Patent Literature 1, because the light source unit is held by the connection unit and the connection unit is installed to the heat sink, there is a problem where the heat sink does not dissipate heat by directly receiving heat from the light source unit and must dissipate heat via the connection unit and heat dissipation is unfavorable. Moreover, because the heat sink is disposed on the outer side of the rear frame and connected to the light source unit, which is on an inner side of the rear frame, via the connection unit, there is a problem where a device configuration for moving the heat sink together with the light source unit is complex.

### [Summary of the Invention]

A display device in accordance with one or more embodiments can more effectively dissipate heat from a light source unit by a heat sink and can simplify a configuration whereby the light source unit and the heat sink are moved according to expansion and contraction of a light guide plate due to heat.

In one aspect, a display device according to one or more embodiments of the present invention may comprise a display unit, a light source unit, a light guide plate that includes an incident end surface and guides the light incident from the incident end surface to the display unit, a spacer portion that separates the incident end surface and the light source unit by the predetermined distance at the predetermined interval, a heat sink that is disposed on an opposite side of the light guide plate on the light source unit, fixedly holds the light source unit, and is separate from and not connected to the light guide plate, a biasing member that biases the light source unit and the heat sink to a light-guide-plate side, and a rear frame that is disposed on an outer side of the heat sink and supports the heat sink so that the heat sink is movable in a first direction orthogonal to the incident end surface.

According to one or more embodiments of the present invention, as above, by comprising the heat sink that fixedly holds the light source unit, the light source unit may be held by the heat sink; therefore, heat from the light source unit may be immediately dissipated from the heat sink. Therefore, the display device may efficiently dissipate the heat from the light source unit by the heat sink. Moreover, by comprising the spacer portion that separates the incident end surface and the light source unit by the predetermined distance at the predetermined interval and providing the rear frame that supports the heat sink so that the heat sink is movable in the first direction orthogonal to the incident end surface on the outer side of the heat sink, the heat sink, similarly to the light source unit, becomes movable in a state of being disposed on an inner side of the rear frame, and the heat sink moves while the distance between the light source unit and the light guide plate are separated by the predetermined distance at the constant interval by the spacer portion; therefore, a configuration of moving the light source unit and the heat sink may be simplified.

According to one or more embodiments above, for example, the light source unit and the heat sink may move while being separated at the predetermined interval relative to the light guide plate via the spacer portion in conjunction with movement in the first direction of the incident end surface by expansion or contraction of the light guide plate. By such a configuration, even in a situation where the light guide plate expands or contracts, the predetermined interval between the light source unit and the light guide plate may be maintained; therefore, an incidence amount of the light to the light guide plate may be stabilized.

According to one or more embodiments above, for example, the rear frame may include a side surface portion positioned on an outer side of the heat sink in the first direction, and the biasing member may be disposed between the side surface portion of the rear frame and the heat sink to continuously bias the heat sink to the light-guide-plate side. By such a configuration, even in the situation where the light guide plate expands or contracts, a pressing force to the light-guide-plate side is continuously applied to the light source unit and the heat sink by the biasing member; therefore, the light source unit and the light guide plate may be reliably separated by the predetermined distance at the predetermined interval via the spacer portion.

The display device according to one or more embodiments above, for example, further may comprise a reflective sheet that is disposed on a rear side of the light guide plate on an opposite side of a front side on which the display unit is disposed in the light guide plate, and a support portion that supports the light guide plate and the reflective sheet from the rear side, wherein the support portion, even in a situation where it moves together with the heat sink and the support portion moves, has a predetermined gap for preventing an end portion on a light source unit side of the reflective sheet from abutting the support portion. As a result, by the expansion or contraction of the light guide plate, the reflective sheet disposed on the rear side of the heat sink abuts the support portion and prevent a force from being applied in a surface direction of the reflective sheet; therefore, deflection may be suppressed from arising in the reflective sheet.

In this situation, for example, the support portion may include a light guide plate support surface that supports the light guide plate and a reflective sheet support surface that supports the reflective sheet, wherein a difference in height in a front and rear direction between the light guide plate support surface and the reflective sheet support surface is greater than a thickness in a front and rear direction of the reflective sheet. By such a configuration, by the gap being formed between the reflective sheet, which is disposed between the light guide plate support surface and the reflective sheet support surface, and the light guide plate, a contact surface pressure between the reflective sheet and the light guide plate is reduced; therefore, the reflective sheet becomes less likely to move in conjunction with the movement of the light guide plate. Thus, due to the reflective sheet abutting the support portion by the movement of the reflective sheet, deflection may be suppressed from arising in the reflective sheet.

According to one or more embodiments above, for example, the light source unit may include a light source unit that emits a light and a mounting substrate on which the light source unit is mounted, wherein the spacer portion respectively contacts a mounting surface of the mounting substrate on which the light source unit is mounted and the incident end surface of the light guide plate, so that a thickness of the spacer portion corresponding to the gap in the first direction between the mounting surface and the incident end surface is greater than a thickness of the light source unit in the first direction, and so that the incident end surface and the light source unit are separated by the predetermined distance in a state of being near each other at the predetermined interval. As a result, because the light source unit and the light guide plate (incident end surface) may be separated by the distance in the state of being near each other at the predetermined interval, the incidence amount of the light to the light guide plate is stabilized, and a usage efficiency of the light may be improved.

According to one or more embodiments above, for example, the incident end surface of the light guide plate may be an end surface on a longitudinal-direction side of the light guide plate that is the first direction, and the light guide plate may be supported by the rear frame in a state of being positioned on the rear frame in a substantially central position in a longitudinal direction. As a result, an expansion amount of the light guide plate, whose thermal expansion is large, in the longitudinal direction may be sorted evenly to both end-portion sides in the longitudinal direction of the light guide plate; therefore, a margin region provided for the expansion on both end-portion sides of the light guide plate may be made small. Thus, a size of a frame of the display device in a longitudinal direction may be made small.

In this situation, for example, the light guide plate may include a first engagement portion formed on an end portion on a lateral-direction side in the substantially central position in the longitudinal direction, and the rear frame may be provided, in a position corresponding to the first engagement portion, with a second engagement portion that engages with the first engagement portion, so that the light guide plate is positioned in the longitudinal direction by engaging the second engagement portion with the first engagement portion. As a result, the light guide plate may be reliably positioned on to the rear frame in the substantially central position in the longitudinal direction.

According to one or more embodiments above, for example, the rear frame may include a guide portion that is provided on an inner-top-surface side of the rear frame and guides the movement of the heat sink, and the heat sink that slides in the first direction along the guide portion. As a result, by the guide portion of the rear frame, the sliding of the heat sink in conjunction with the movement of the light guide plate may be stabilized.

According to one or more embodiments above, for example, two incident end surfaces of the light guide plate may be provided on both end surface of the light guide plate in the first direction, and the light source unit, the spacer portion, the heat sink, and the biasing member are respectively provided on both incidence-end-surface sides of the light guide plate. As a result, a guiding distance of a light in a surface direction of the light guide plate may be shortened; therefore, a brightness of an image displayed on the display unit may be stabilized.

According to one or more embodiments above, for example, the biasing member may be formed integrally with the rear frame. As a result, the biasing member and the rear frame are integrally formed; therefore, a device configuration may be simplified.

The display device according to one or more embodiments of the present invention may comprise a display unit, a light source unit, a light guide plate that includes an incident end surface and guides the light incident from the incident end surface to the display unit, a heat sink that fixedly holds the light source unit, and a fixing member for integrally fixing an incidence-end-surface side of the light guide plate and the heat sink in a state where a distance between the incident end surface and the light source unit is maintained at a predetermined interval.

According to one or more embodiments of the present invention, as above, by comprising the fixing member for integrally fixing the incidence-end-surface side of the light guide plate and the heat sink in the state where the distance between the incident end surface and the light source unit is maintained at the predetermined interval, the incidence-end-surface side of the light guide plate and the heat sink are integrally fixed by the fixing member; therefore, even in the situation where the light guide plate expands or contracts due to heat, the incident end surface and the light source unit may be separated by the predetermined distance at the predetermined interval. Thus, the incidence amount of the light to the light guide plate may be stabilized; therefore, the display device may improve the usage efficiency of the light.

The display device according to one or more embodiments above, for example, may comprise a rear frame that supports the heat sink so that the heat sink is movable in a direction orthogonal to the incident end surface of the light guide plate, wherein the heat sink that moves relative to the rear frame while being separated at the predetermined interval in conjunction with the movement of the incident end surface in the first direction due to the expansion or contraction of the light guide plate. As a result, in the situation where the light guide plate expands or contracts due to heat, the heat sink on the incidence-end-surface side of the light guide plate may be stably moved relative to the rear frame.

According to one or more embodiments above, for example, by the fixing member being installed to the heat sink so that the incidence-end-surface side of the light guide plate is positioned between the fixing member and the heat sink, the incidence-end-surface side of the light guide plate and the heat sink may be integrally fixed to each other. As a result, so that the light guide plate is positioned by the fixing member and the heat sink, the heat sink and the light guide plate are fixed; therefore, the heat sink and the light guide plate may be stably and integrally fixed.

The display device according to one or more embodiments above, for example, may comprises a spacer portion that is disposed between the incident end surface and the light source unit and separates the incident end surface and the light source unit by the predetermined distance at the predetermined interval and a biasing member that biases toward an incidence-end-surface-spacer portion side of the light guide plate. As a result, so that the heat sink that fixedly holds the light source unit and the incidence-end-surface side of the light guide plate are integrally fixed by the fixing member, the incident end surface of the light guide plate is biased toward a spacer portion side by the biasing member; therefore, a function of the spacer portion that separates the incident end surface of the light guide plate and the light source unit by the predetermined distance at the predetermined interval may be reliably exhibited.

According to one or more embodiments above, for example, the fixing member may include a plate-shaped fixing member that abuts a surface of the light guide plate on an opposite side of a surface of the light guide plate abutting the heat sink and extends in a direction along the incident end surface of the light guide plate, and the plate-shaped fixing member is to integrally fix the incidence-end-surface side of the light guide plate and the heat sink by applying a pressing force on a heat-sink side of the light guide plate. As a result, the plate-shaped fixing member may be made to reliably make surface contact with the light guide plate; therefore, the fixed state between the incidence-end-surface side of the light guide plate and the heat sink may be further stabilized.

According to one or more embodiments above, for example, the fixing member may include a fourth engagement portion that engages with the light guide plate and a fifth engagement portion that engages with the heat sink, the heat sink may comprise an opening portion into which the fixing member is inserted and installed, and the fixing member may integrally fix the incident end surface of the light guide plate and the heat sink by engaging the fourth engagement portion with the heat sink and engaging the fifth engagement portion with the light guide plate by being inserted into the opening portion. As a result, by merely inserting the fixing member into the opening portion of the heat sink, the fourth engagement portion and the fifth engagement portion respectively engage with the heat sink and the light guide plate; therefore, the heat sink and the light guide plate may be easily engaged. Moreover, the heat sink and the light guide plate may be engaged by the fixing member itself; therefore, a member for installing the fixing member (for example, a screw) may be eliminated.

In this situation, for example, the display device may comprise a spacer portion that is disposed between the incident end surface of the light guide plate and the light source unit and separates the incident end surface and the light source unit by the predetermined distance at the predetermined interval, wherein the fixing member also functions as the spacer portion. By such a configuration, the fixing member may be made to also function as the spacer portion; therefore, compared to a configuration where the fixing member and the spacer portion are provided separately, a component count may be reduced.

In one or more embodiments where the fixing member comprises the fourth engagement portion and the fifth engagement portion, for example, an end portion of the heat sink may be formed in a U shape to cover the incident end surface of the light guide plate and an upper surface near the incidence surface. As a result, the incident end surface of the light guide plate and the upper surface near the incident end surface are covered by the U-shaped end portion of the heat sink; therefore, the end portion of the heat sink may be made to also function as a reflector that reflects the light from the light source unit toward the light guide plate. Thus, the usage efficiency of the light may be further improved.

According to one or more embodiments of the present invention, as above, the display device may more effectively dissipate heat from the light source unit by the heat sink and may simplify the configuration whereby the light source unit and the heat sink are moved according to the expansion and contraction of the light guide plate due to heat.

### [Brief Descriptions of the Drawings]

FIG. 1 shows an overall perspective view viewing a television device according to first to sixth examples of the present invention from the front.
FIG. 2 shows an exploded perspective view viewing a display module and a rear frame of the television device according to one or more embodiments of the first example of the present invention from the front.
FIG. 3 shows a perspective view illustrating a light source unit of the television device according to one or more embodiments of the first example of the present invention.
FIG. 4 shows a perspective view illustrating a heat sink of the television device according to one or more embodiments of the first example of the present invention.
FIG. 5 shows a perspective view illustrating a support spacer member of the television device according to one or more embodiments of the first example of the present invention.
FIG. 6 shows a partially enlarged view illustrating a state of installing the heat sink and a light guide plate to the rear frame of the television device according to one or more embodiments of the first example of the present invention.
FIG. 7 shows a partially enlarged view illustrating a state where the heat sink and the light guide plate are installed to the rear frame of the television device according to one or more embodiments of the first example of the present invention.
FIG. 8 shows a schematic cross-sectional view along line 400-400 in FIG. 7.
FIG. 9 shows a perspective view illustrating a state of positioning and installing the light guide plate to the rear frame of the television device according to one or more embodiments of the first example of the present invention.
FIG. 10 shows a partially enlarged view of the rear frame and the light guide plate in FIG. 9.
FIG. 11 shows an exploded perspective view viewing the display module and the rear frame of the television device according to one or more embodiments of the second example of the present invention from the front.
FIG. 12 shows a partially enlarged view illustrating a state where the heat sink and the light guide plate are installed to a rear frame of the television device according to one or more embodiments of the third example of the present invention.
FIG. 13 shows an exploded perspective view viewing the display module and the rear frame of the television device according to one or more embodiments of the fourth example of the present invention from the front.
FIG. 14 shows a perspective view illustrating a state of positioning and installing the light guide plate to the rear frame of the television device according to one or more embodiments of the fourth example of the present invention.
FIG. 15 shows a perspective view illustrating the heat sink of the television device according to one or more embodiments of the fourth example of the present invention.
FIG. 16 shows a perspective view illustrating a plate-shaped fixing member of the television device according to one or more embodiments of the fourth example of the present invention.
FIG. 17 shows a perspective view illustrating a state of fixing the light guide plate and the heat sink by the plate-shaped fixing member of the television device according to one or more embodiments of the fourth example of the present invention.
FIG. 18 shows a perspective view illustrating a state where the plate-shaped fixing member of the television device according to one or more embodiments of the fourth example of the present invention is installed to the heat sink and disposed on the rear frame.
FIG. 19 shows a perspective view illustrating a state where the light guide plate and the heat sink are fixed and disposed on the rear frame by the plate-shaped fixing member of the television device according to one or more embodiments of the fourth example of the present invention.
FIG. 20 shows a schematic cross-sectional view along line 400-400 in FIG. 19.
FIG. 21 shows a perspective view illustrating a state of fixing the light guide plate and a heat sink by a fixing spacer member of the television device according to one or more embodiments of the fifth example of the present invention.
FIG. 22 shows a schematic cross-sectional view along line 500-500 in FIG. 21.
FIG. 23 shows an exploded perspective view viewing the display module and the rear frame of the television device according to one or more embodiments of the sixth example of the present invention from the front.
FIG. 24 shows a schematic cross-sectional view in a state where the light guide plate and the heat sink are fixed by the fixing spacer member of the television device according to one or more embodiments of a seventh example of the present invention.

### [Detailed Description of Embodiments]

Embodiments of the present invention will be described below based on the drawings.

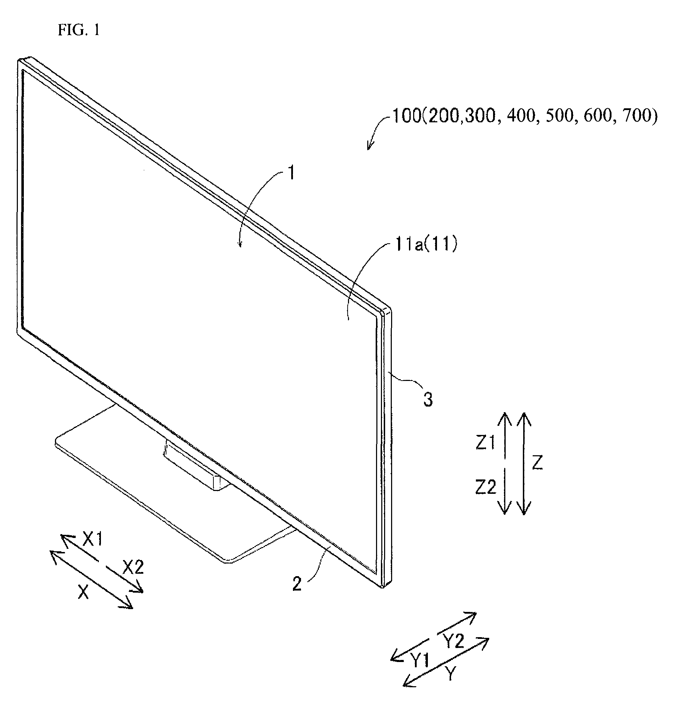

(First Example) A television device 100 according to one or more embodiments of a first example of the present invention will be described with reference to FIGS. 1 to 10. Hereinbelow, a side of the television device 100 on which an image is displayed will be described as the front (Y1 direction), and an opposite side of the front (Y1 direction) will be described as the rear (Y2 direction); a direction along the front and the rear will be defined as a front-rear direction (Y direction). Moreover, a direction orthogonal to this front-rear direction will be defined as a horizontal direction (X direction) and a vertical direction (Z direction). The television device 100 is an example of a "display device" of the present invention. Moreover, the horizontal direction is an example of a "first direction" and a "longitudinal direction" of the present invention.

As illustrated in FIG. 1, the television device 100 according to one or more embodiments of the first example of the present invention may comprise a display module 1, a front cabinet (front side casing) 2 that covers the display module 1 from the front (Y1 direction), and a rear frame 3 (rear side casing) that covers the display module 1 from the rear (Y2 direction).

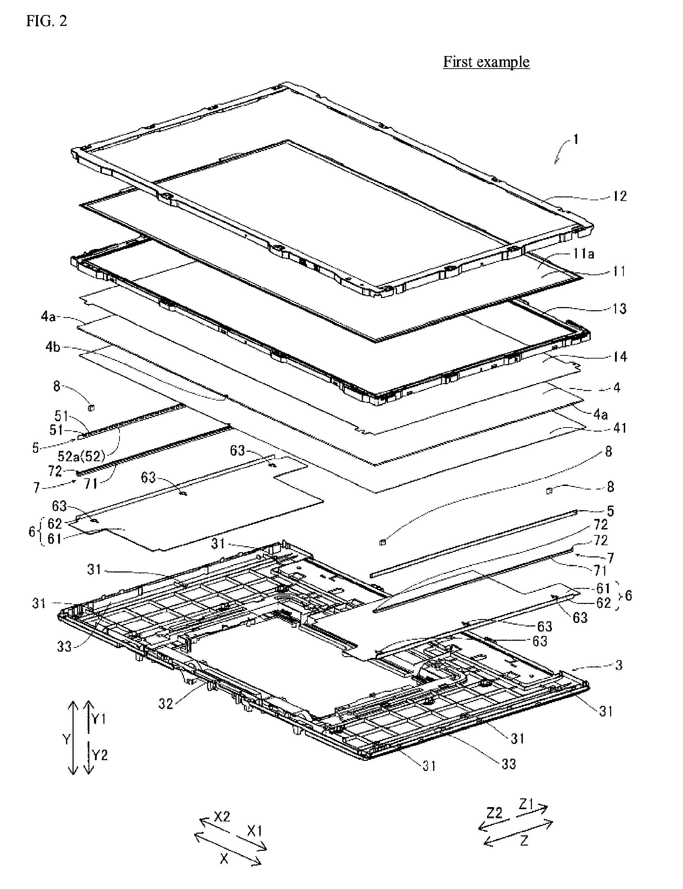

As illustrated in FIG. 2, the display module 1 includes a liquid crystal cell 11 that includes a display surface 11a on a surface on a front side (Y1-direction side), a bezel 12 that holds the liquid crystal cell 11 from the front (Y1 direction), a mold frame 13 that holds the liquid crystal cell 11 from the rear (Y2 direction), various types of optical sheets 14, a light guide plate 4, a reflective sheet 41, a light source unit 5, a heat sink 6, a support spacer member 7, and a first biasing member 8. The liquid crystal cell 11 is an example of a "display unit" of one or more embodiments of the present invention.

The bezel 12 is installed to the mold frame 13 in a state of interposing the liquid crystal cell 11 from the front (Y1 direction) of the mold frame 13. The mold frame 13 is a frame-shaped member made of resin and, in addition to the liquid crystal cell 11, holds the optical sheet 14 on a back-surface side. Moreover, the mold frame 13 is disposed on an inner side of the front cabinet 2. The optical sheet 14 is a diffusion plate or another functional sheet and is provided in a plurality. The light source unit 5 is respectively provided near both end portions of the light guide plate 4 in the horizontal direction (X direction). The light guide plate 4 is disposed on a rear side (Y2-direction side) of the optical sheet 14. Moreover, the light guide plate 4 respectively comprises an incident end surface 4a on both end portions in the horizontal direction (X direction). Moreover, the light guide plate 4 guides the light emitted from the light source unit 5 and incident from the incident end surface 4a of the light guide plate 4 to the liquid crystal cell 11.

The incident end surface 4a of the light guide plate 4 is respectively provided on both end surfaces of the light guide plate 4 in the horizontal direction (X direction). Moreover, the television device 100 is respectively provided with the light source unit 5, the heat sink 6, the support spacer member 7, and the first biasing member 8 on both of the two incident end surfaces 4a. The reflective sheet 41 is disposed on a rear side (Y2-direction side) of the light guide plate 4 and reflects the light from the light source unit 5 to a light-guide-plate 4 side (liquid-crystal-cell 11 side). Moreover, the heat sink 6 is respectively provided near both end portions of the light guide plate 4 in the horizontal direction (X direction). The support spacer member 7 is disposed on a front-surface side of the heat sink 6 and supports the light guide plate 4 and the reflective sheet 41.

This television device 100 is a liquid television device of a so-called edge-light type (side-light type) where the light source 5 is disposed on an end-portion side of the light guide plate 4. The light source units 5, the heat sinks 6, the support spacer members 7, and the first biasing members 8 on the X1-direction side and the X2-direction side have configurations similar to each other. Therefore, hereinbelow, for the light source unit 5, the heat sink 6, the support spacer member 7, and the first biasing member 8, the configuration on the X2-direction side will be described, and description of the configuration on the X1-direction side will be omitted.

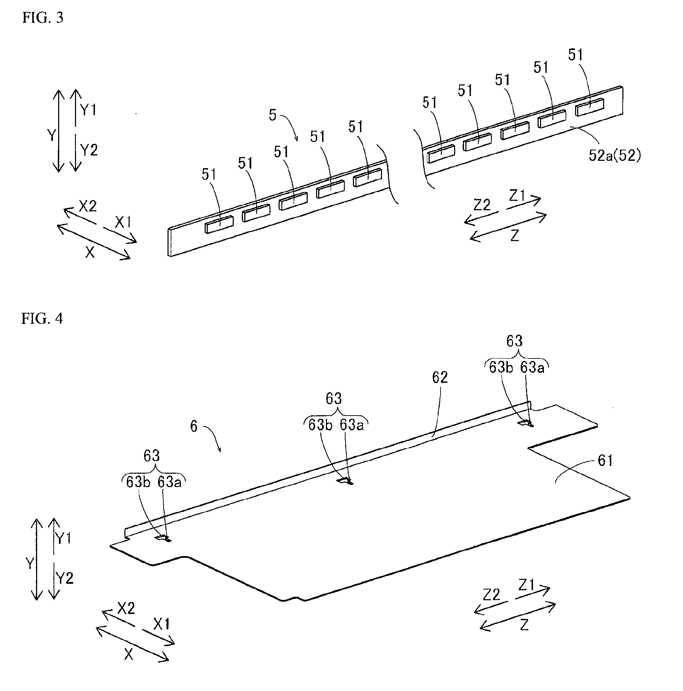

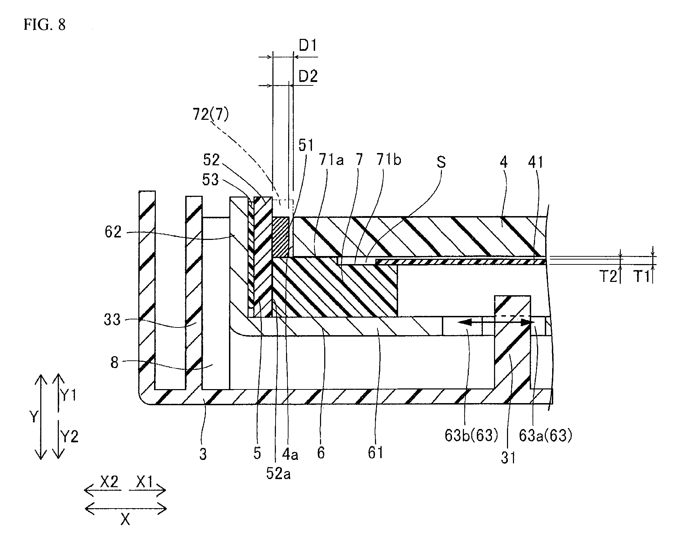

As illustrated in FIG. 3, the light source unit 5 includes a light-emitting diode or LED 51 that emits a light and a mounting substrate 52 on which the LED 51 is mounted. Moreover, the mounting substrate 52 is formed in a tabular shape. Moreover, the mounting substrate 52 is formed to extend in a vertical direction (Z direction) of the light guide plate 4. Moreover, the mounting substrate 52 a mounting surface 52a and is disposed so the mounting surface 52a is orthogonal to the horizontal direction (X direction). Therefore, the mounting substrate 52 is disposed parallel to the incident end surface 4a of the light guide plate 4. Moreover, an interval D1 (see FIG. 8) between the mounting substrate 52 and the light guide plate 4 (incident end surface 4a) is held constant by the support spacer member 7. The LED 51 is an example of a "light source" of one or more embodiments of the present invention.

A plurality of LEDs 51 are disposed to line up in the vertical direction (Z direction) on the mounting surface 52a on an X1-direction side of the mounting substrate 52. Moreover, the LED 51 and the light guide plate 4 (incident end surface 4a) are separated by a predetermined distance at a predetermined interval (D1 to D2) (see FIG. 8), by the interval D1 (see FIG. 8) between the mounting substrate 52 and the light guide plate 4 (incident end surface 4a) being held constant. The predetermined interval is set to about 0.1 mm.

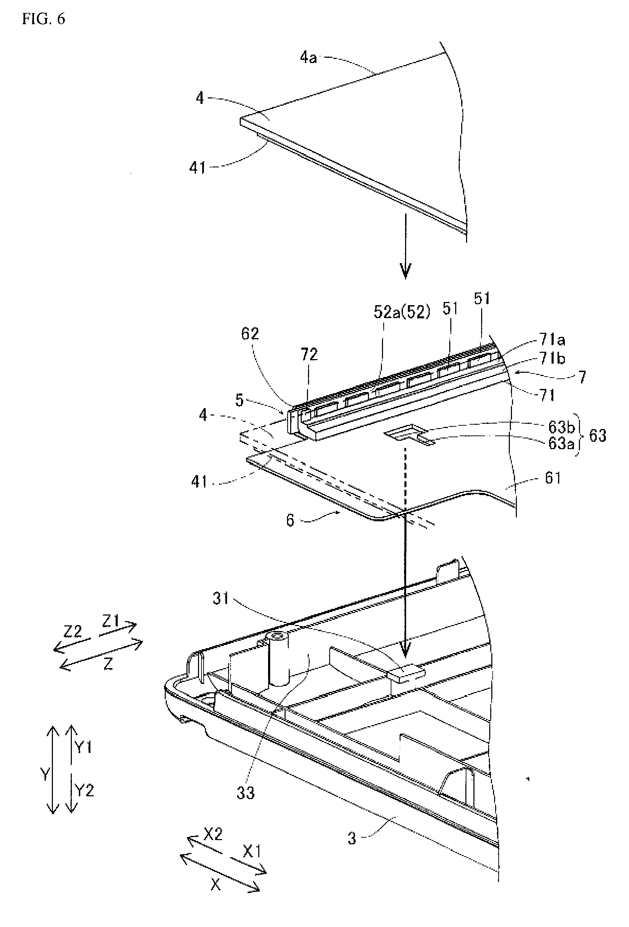

Furthermore, as illustrated in FIG. 6, the heat sink 6 is separate from and not connected to the light guide plate 4 and fixedly holds the light source unit 5. For example, the heat sink 6 includes a tabular portion 61 disposed parallel to the light guide plate 4, and a mounting substrate installation portion 62 that rises toward the front (Y1 direction) from an end portion on an outer side (X2-direction side) and to which the mounting substrate 52 is installed. Moreover, the heat sink 6 (mounting substrate installation portion 62) is disposed on the light source unit 5 on an opposite side (X2-direction side) of the light guide plate 4.

The mounting substrate installation portion 62 fixedly holds the mounting substrate 52 (light source unit 5) via a heat dissipating tape 53 (see FIG. 8) affixed on a surface on an inner side (surface on the X1-direction side).

The tabular portion 61 comprises a hole portion 63 that is engaged to the rear frame 3. Three hole portions 63 are formed, and each is disposed to line up separated by predetermined intervals from each other in the vertical direction (Z direction). Moreover, as illustrated in FIG. 6, the hole portion 63 is formed from a rail portion 63a of an elongated shape extending in the horizontal direction (X direction), and an introduction portion 63b that is formed on an outer side (X2-direction side) of the rail portion 63a and introduces a portion of the rear frame 3, and is formed in a T-shape overall. Moreover, the heat sink 6 is movable in the horizontal direction (X direction) in which the rail portion 63a extends relative to the rear frame 3 by engaging with a hook guide portion 31, that will be described below, of the rear frame 3 via the hole portion 63.

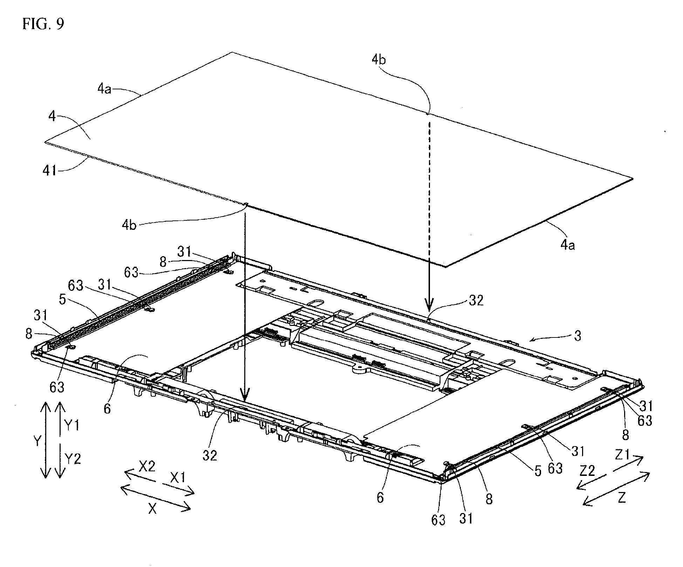

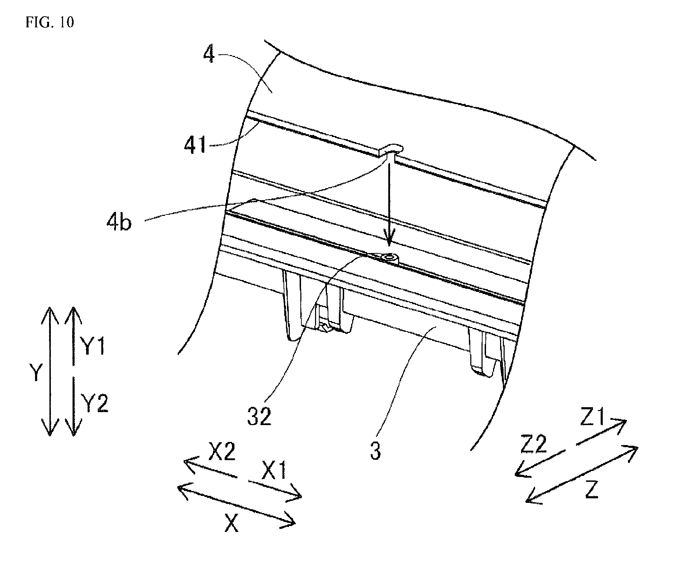

As illustrated in FIGS. 9 and 10, the light guide plate 4 is supported by the rear frame 3 in a state of being positioned on the rear frame 3 in a substantially central position in the horizontal direction (X direction). For example, the light guide plate 4 includes a pair of notched engagement portions 4b of a notched shape formed in an end portion on a vertical-direction (Z-direction) side in the substantially central position in the horizontal direction (X direction). By a convex engagement portion 32 that will be described below of the rear frame 3 engaging with this notched engagement portion 4b, the light guide plate 4 is positioned in the horizontal direction (X direction) on the rear frame 3 in a situation where expansion or contraction arises due to heat from the light source unit 5. That is, the light guide plate 4 evenly expands or contract in both left and right directions (X1 direction and X2 direction) with the substantially central position in the horizontal direction (X direction) of the rear frame 3 as a reference. A notch of a shape identical to that of the notched engagement portion 4b is formed in a position on the reflective sheet 41 corresponding to the notched engagement portion 4b of the rear frame 3. The notched engagement portion 4b is an example of a "first engagement portion" of one or more embodiments of the present invention.

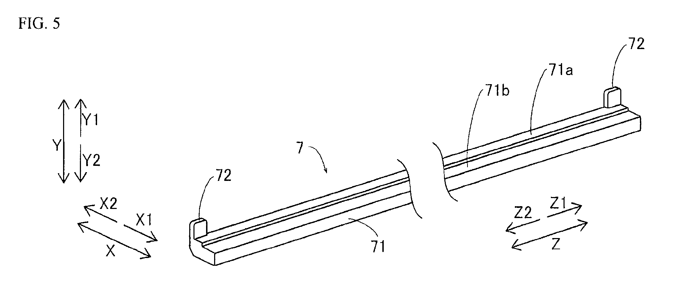

As illustrated in FIG. 5, the support spacer member 7 is formed in a rod shape extending in the Z direction. Moreover, as illustrated in FIG. 8, the support spacer member 7 supports the light guide plate 4 and the reflective sheet 41 from the rear side (Y2-direction side). Moreover, the support spacer member 7 is disposed in front of the heat sink 6 to respectively abut the tabular portion 61 of the heat sink 6 and the mounting substrate 52 of the light source unit 5. Moreover, the support spacer member 7 includes a support portion 71 (see FIG. 5) that holds the light guide plate 4 and the reflective sheet 41, and a first spacer portion 72 (see FIG. 5) that separates the incident end surface 4a of the light guide plate 4 and the light source unit 5 (mounting surface 52a on a light-guide-plate 4 side of the LED 51) by the predetermined distance at the predetermined interval (D1 to D2). The first spacer portion 72 is one example of the spacer portion. The support spacer member 7 is formed by a material less likely to expand or contract due to heat compared to the light guide plate 4.

The support portion 71 (support spacer member 7) moves together with the heat sink 6. That is, the support spacer member 7 moves together with the heat sink 6 because the first spacer portion 72 integral with the support portion 71 is continuously interposed between the light guide plate 4 (incident end surface 4a) and the mounting substrate 52 (mounting surface 52a) of the light source unit 5. Moreover, the support portion 71, in a situation where it moves together with the heat sink 6, has a predetermined gap S (see FIG. 8) for preventing an end portion on a light-source-unit 5 side (outer side (X2-direction side)) of the reflective sheet 41 from abutting the support portion 71.

Furthermore, as illustrated in FIGS. 5, 6, and 8, the support portion 71 includes a light guide plate support portion 71a that supports the light guide plate 4, and a reflective sheet support portion 71b that supports the reflective sheet 41 on a rear side (Y2-direction side) of the light guide plate support portion 71a. Moreover, as illustrated in FIG. 8, a difference T1 in height in the front and rear direction (Y direction) between the light guide plate support portion 71a and the reflective sheet support portion 71b is greater than a thickness T2 of the reflective sheet 41 in the front and rear direction (Y direction). Therefore, the reflective sheet 41 is positioned between the light guide plate 4 and the support spacer member 7 and not held in a state of being pressed in the front and rear direction (Y direction).

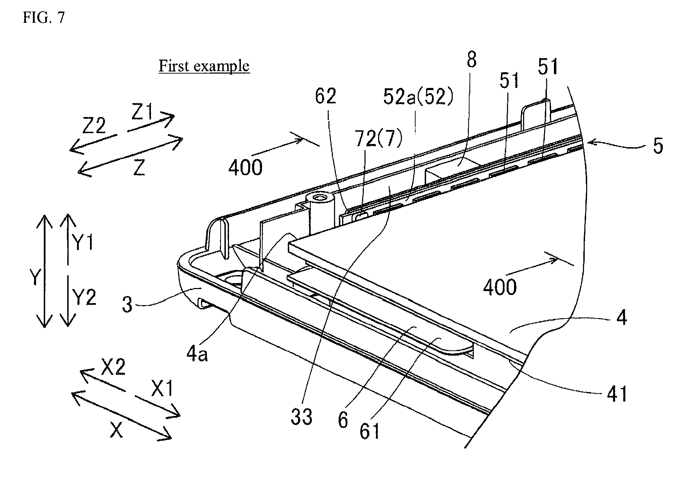

As illustrated in FIG. 5, the first spacer portion 72 is formed in a tabular shape and is formed to project to the front (Y1 direction) from both end portions respectively of the support portion 71 of the rod shape. Moreover, as illustrated in FIGS. 6 and 7, the first spacer portion 72 respectively contacts the mounting surface 52a of the mounting substrate 52 on which the LED 51 is mounted and the incident end surface 4a of the light guide plate 4. Moreover, as illustrated in FIG. 8, the thickness D1 of the first spacer portion 72 corresponding to the gap in the horizontal direction (X direction) between the mounting surface 52a and the incident end surface 4a of the light guide plate 4 is greater than the thickness D2 in the horizontal direction (X direction) of the LED 51, and the incident end surface 4a of the light guide plate 4 and the LED 51 (mounting surface 52a on the light-guide-plate 4 side of the LED 51) are maintained in a state of being near the predetermined interval (D1 to D2). That is, by being formed thicker than the LED 51 in the horizontal direction (X direction), the first spacer portion 72 holds the distance between the LED 51 and the light guide plate 4 (incident end surface 4a) so they do not abut each other.

As illustrated in FIGS. 6 to 8, the rear frame 3 is disposed on the outer side of the heat sink 6. That is, the rear frame 3 covers the heat sink 6 from the rear (Y2 direction) and the side (X direction and Z direction). Moreover, as illustrated in FIGS. 6 and 8, the rear frame 3 includes the hook guide portion 31. The hook guide portion 31 is provided on an inner-top-surface side (surface on Y1-direction side) of the rear frame 3. Moreover, the rear frame 3 is supported by a guide of the hook guide portion 31 to enable moving the heat sink 6 in the horizontal direction (X direction) orthogonal to the incident end surface 4a of the light guide plate 4. Thus, the heat sink 6 moves relative to the rear frame 3 in conjunction with the movement of the incident end surface 4a in the horizontal direction due to the expansion or contraction of the light guide plate 4.

For example, the rear frame 3 projects to the front (Y1 direction) in a position corresponding to the hole portion 63 of the heat sink 6 and is formed with the hook guide portion 31 of a T-shape (see FIG. 6) that engages with the hole portion 63 of the heat sink 6. Moreover, the rear frame 3 slides the heat sink 6 in the horizontal direction (X direction) by moving the rail portion 63a extending in the horizontal direction (X direction) of the heat sink 6 along a root portion of the hook guide portion 31. Moreover, the hook guide portion 31 is formed so a tip in the front (Y1 direction) is a plate shape parallel to the tabular portion 61 of the heat sink 6. Moreover, the heat sink 6 is introduced through the introduction portion 63b of the heat sink 6 and the heat sink 6 is moved to a rail-portion 63a side in an inner-side direction (X2 direction), as a result, the hook guide portion 31 is engaged with the heat sink 6. The hook guide portion 31 is an example of a "guide portion" of one or more embodiments of the present invention.

Furthermore, as illustrated in FIGS. 9 and 10, the rear frame 3 includes a convex engagement portion 32. The convex engagement portion 32 is formed in a cylindrical shape projecting in the Y1 direction. Moreover, the convex engagement portion 32 is respectively provided in positions corresponding to the two notched engagement portions 4b of the light guide plate 4 when viewed from the front and rear direction (Y direction). Moreover, the notched engagement portion 4b is inserted into the convex engagement portion 32 from the front side (Y1-direction side). Thus, a configuration is such that the notched engagement portion 4b engages with the convex engagement portion 32. Moreover, the rear frame 3 positions the light guide plate 4 in the horizontal direction (X direction) by the notched engagement portion 4b of the light guide plate 4 engaging with the convex engagement portion 32. The convex engagement portion 32 is an example of a "second engagement portion" of one or more embodiments of the present invention.

Furthermore, as illustrated in FIGS. 6 to 8, the rear frame 3 includes a side surface portion 33. The side surface portion 33 is disposed on an outer side (X2-direction side) in the horizontal direction of the heat sink 6.

As illustrated in FIG. 7, the first biasing member 8 is disposed between the side surface portion 33 of the rear frame 3 and the heat sink 6 (mounting substrate installation portion 62). Moreover, the first biasing member 8 is disposed in a state of abutting a surface (surface on the X2-direction side) on an opposite side of the light source unit 5 installed to the mounting substrate installation portion 62. Moreover, the first biasing member 8 is disposed to continuously bias the heat sink 6 and the light source unit 5 to the light-guide-plate 4 side. For example, the first biasing member 8 is formed from an elastic material such as rubber and is formed in a prismatic shape. Moreover, one first biasing member 8 is respectively provided (see FIG. 9) near end portions of the heat sink 6 on a Z1-direction side and a Z2-direction side. Moreover, the first biasing member 8 is press fitted between the heat sink 6 and the side surface portion 33 of the rear frame 3. Moreover, the first biasing member 8 maintains a continuously compressed state between the heat sink 6 and the side surface portion 33 of the rear frame 3. Thus, the first biasing member 8 continuously biases the heat sink 6 to an inner side (X1-direction side) in the horizontal direction (X direction), that is, to the light-guide-plate 4 side. Thus, the heat sink 6 continuously biases the support spacer member 7 that abuts the light guide plate 4 (incident end surface 4a) to the light-guide-plate 4 side by the mounting substrate 52 of the light source unit 5 installed to the heat sink 6. As a result, the state of the support spacer member 7 abutted to the light guide plate 4 is maintained. That is, the support spacer member 7 is maintained in the state of being abutted to the light guide plate 4 even if a position of the incident end surface 4a of the light guide plate 4 is displaced in the horizontal direction (X direction) by the expansion or contraction of the light guide plate 4.

According to one or more embodiments of the first example, effects such as below can be obtained.

According to one or more embodiments of the first example , as above, by providing the heat sink 6 that fixedly holds the light source unit 5, the light source unit 5 is held by the heat sink 6; therefore, the heat from the light source unit 5 may be immediately dissipated from the heat sink 6. Therefore, the television device 100 may efficiently dissipate the heat from the light source unit 5 by the heat sink 6. Moreover, by providing the first spacer portion 72 that separates the incident end surface 4a and the light source unit 5 by the predetermined distance at the predetermined interval and providing the rear frame 3 that supports the heat sink 6 so the heat sink 6 can move in the horizontal direction (X direction) orthogonal to the incident end surface 4a on the outer side of the heat sink 6, the heat sink 6, similarly to the light source unit 5, becomes movable in the state of being disposed on the inner side of the rear frame 3, and the heat sink 6 moves while the distance between the light source unit 5 and the light guide plate 4 is held constant by the first spacer portion 72; therefore, a configuration of moving the light source unit 5 and the heat sink 6 may be simplified.

Furthermore, according to one or more embodiments of the first example, as above, the light source unit 5 and the heat sink 6 move, while being separated at the predetermined interval relative to the light guide plate 4 via the first spacer portion 72, in conjunction with movement of the incident end surface 4a in the horizontal direction (X direction) by the expansion or contraction of the light guide plate 4. Thus, even in a situation where the light guide plate 4 expands or contracts, the light source unit 5 and the light guide plate 4 may be separated at the predetermined interval; therefore, an incidence amount of the light to the light guide plate 4 may be stabilized.

Furthermore, according to one or more embodiments of the first example, as above, the first biasing member 8 is disposed between the side surface portion 33 of the rear frame 3 and the heat sink 6 to continuously bias the heat sink 6 to the light-guide-plate 4 side. Thus, even in the situation where the light guide plate 4 expands or contracts, the pressing force to the light-guide-plate 4 side is continuously applied to the light source unit 5 and the heat sink 6 by the first biasing member 8; therefore, the light source unit 5 and the light guide plate 4 may be reliably separated by the predetermined distance at the predetermined interval via the first spacer portion 72.

Furthermore, according to one or more embodiments of the first example, as above, the predetermined gap S is provided for preventing the end portion on the light-source-unit 5 side of the reflective sheet 41 from abutting the support portion 71 even in a situation where the support portion 71 (spacer support member 7) is moved together with the heat sink 6 and the support portion 71 moves. Thus, by the expansion or contraction of the light guide plate 4, the reflective sheet 41 disposed on the rear side of the heat sink 6 can abut the support portion 71 and prevent a force from being applied in a surface direction of the reflective sheet 41; therefore, deflection may be suppressed from arising in the reflective sheet 41.

Furthermore, according to one or more embodiments of the first example, as above, the difference T1 in height in the front and rear direction between a light guide plate support surface 71a and a reflective sheet support surface 71b is made to be greater than the thickness T2 of the reflective sheet 41 in the front and rear direction. Thus, by the gap (T1 to T2) being formed between the reflective sheet 41, which is disposed between the light guide plate support surface 71a and the reflective sheet support surface 71b, and the light guide plate 4, a contact surface pressure between the reflective sheet 41 and the light guide plate 4 is reduced; therefore, the reflective sheet 41 becomes less likely to move in conjunction with the movement of the light guide plate 4. Thus, due to the reflective sheet 41 abutting the support portion 71 of the spacer support member 7 by the movement of the reflective sheet 41, deflection can be suppressed from arising in the reflective sheet 41.

Furthermore, according to one or more embodiments of the first example, as above, the first spacer portion 72 respectively contacts the mounting surface 52a of the mounting substrate 52 on which the light source is mounted and the incident end surface 4a of the light guide plate 4, so that the thickness D1 of the first spacer portion 72 corresponding to the gap in the horizontal direction (X direction) between the mounting surface 52a and the incident end surface 4a is greater than the thickness D2 of the light source in the horizontal direction, and so the incident end surface 4a and the light source 51 are separated in a state of being near each other at the predetermined interval. Thus, because the light source and the light guide plate 4 (incident end surface 4a) can be separated in the state of being near each other at the predetermined interval (D1 to D2), the incidence amount of the light to the light guide plate 4 may be stabilized, and a usage efficiency of the light may be improved.

Furthermore, according to one or more embodiments of the first example, as above, the incident end surface 4a of the light guide plate 4 is made to be the end surface on a horizontal-direction side of the light guide plate 4 that is in the horizontal direction (X direction), and the light guide plate 4 is supported by the rear frame 3 in the state of being positioned on the rear frame 3 in the substantially central position in the horizontal direction. Thus, an expansion amount of the light guide plate 4, whose thermal expansion is large, in the horizontal direction can be sorted evenly to both end-portion sides in the horizontal direction of the light guide plate 4; therefore, a margin region provided for the expansion of the light guide plate 4 on both end-portion sides may be made small. Thus, a size of a frame of the television device 100 in the horizontal direction may be made small.

Furthermore, according to one or more embodiments of the first example, as above, so that the light guide plate 4 is positioned in the horizontal direction by the notched engagement portion 4b formed on the end portion on the vertical-direction side (Z-direction side) in the substantially central position in the horizontal direction (X direction) being provided on the light guide plate 4, the convex engagement portion 32 provided in the position corresponding to the notched engagement portion 4b engages with the notched engagement portion 4b being provided on the rear frame 3, and the convex engagement portion 32 engaging with the notched engagement portion 4b. Thus, the light guide plate 4 may be reliably positioned on the rear frame 3 in a substantially central position in the longitudinal direction (X direction).

Furthermore, according to one or more embodiments of the first example, as above, the hook guide portion 31 that is provided on the inner-top-surface side of the rear frame 3 and guides the movement of the heat sink 6 is provided on the rear frame 3, and the heat sink 6 slides in the horizontal direction (X direction) along the hook guide portion 31. Thus, by the hook guide portion 31 of the rear frame 3, the sliding of the heat sink in conjunction with the movement of the light guide plate 4 may be stabilized.

Furthermore, according to one or more embodiments of the first example, as above, two incident end surfaces 4a of the light guide plate 4 are provided on both end surface of the light guide plate 4 in the horizontal direction (X direction), and the light source unit 5, the support spacer member 7, the heat sink 6, and the first biasing member 8 are respectively provided on both of the two incidence-end-surface 4a sides of the light guide plate 4. Thus, a guiding distance of the light in the surface direction of the light guide plate 4 may be shortened; therefore, a brightness of an image displayed on the liquid crystal cell 11 may be stabilized.

### (Second example)

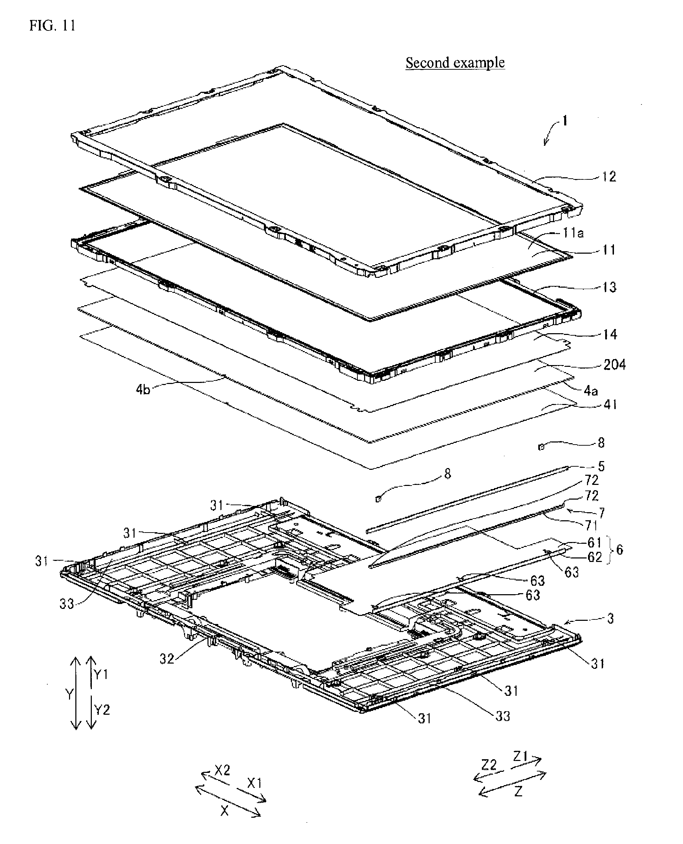

Next, a second example will be described with reference to FIGS. 1 and 11. In the second example, unlike the first example where the light source unit 5 is respectively provided on both end surfaces (X1-direction side end surface and X2-direction side end surface) of the light guide plate 4 in the horizontal direction, an example will be described where the light source unit 5 is provided on only one end surface (X1-direction side end surface) of a light guide plate 204 in the horizontal direction. Configurations similar to those of the first example will be illustrated labeled with reference signs identical to those of the first example, and description thereof will be omitted.

As illustrated in FIG. 11, in a television device 200 (see FIG. 1) according to one or more embodiments of the second example, the incident end surface 4a of the light guide plate 204 is provided only on one end surface (X1-direction side end surface) of the light guide plate 204 in the horizontal direction (X direction). Moreover, in the television device 200, the light source unit 5, the support spacer member 7, the heat sink 6, and the first biasing member 8 are provided on the incidence-end-surface 4a side in the X1 direction. Moreover, in the television device 200, the light source unit 5, the support spacer member 7, the heat sink 6, and the first biasing member 8 are not provided on the X2-direction side.

Other configurations of the second example are similar to those of the first example.

According to one or more embodiments of the second example, effects such as below can be obtained.

According to one or more embodiments of the second example, similarly to the first example, by providing the heat sink 6 that fixedly holds the light source unit 5, the television device 200 can efficiently dissipate the heat from the light source unit 5 by the heat sink 6. Moreover, by providing the first spacer portion 72 that separates the incident end surface 4a and the light source unit 5 by the predetermined distance at the predetermined interval and providing the rear frame 3 that supports the heat sink 6 so that the heat sink is movable in the horizontal direction (X direction) orthogonal to the incident end surface 4a on the outer side of the heat sink 6, the configuration that moves the light source unit 5 and the heat sink 6 for holding the distance of the light source unit 5 and the light guide plate 204 constant can be simplified.

Other effects of one or more embodiments of the second example are similar to those of one or more embodiments of the first example.

### (Third example)

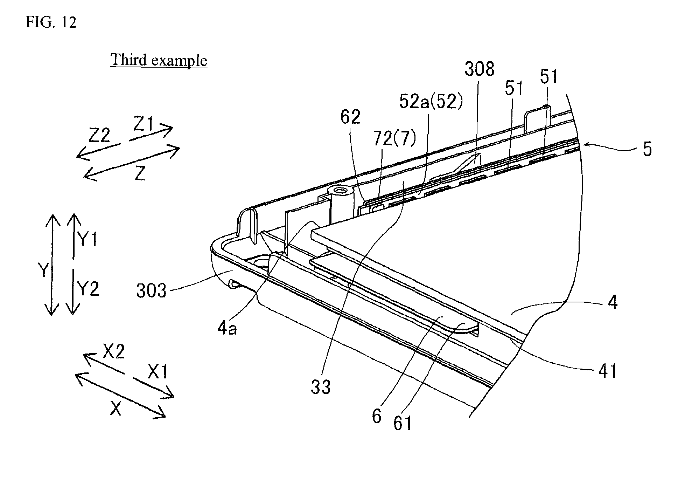

Next, a third example will be described with reference to FIGS. 1 and 12. In this third example, unlike the first example where a first biasing member 308 and the rear frame 3 are separately formed, an example will be described where the first biasing member 308 and a rear frame 303 are integrally formed. Configurations similar to those of the first example will be illustrated labeled with reference signs identical to those of the first example, and description thereof will be omitted.

As illustrated in FIG. 12, a television device 300 (see FIG. 1) according to one or more embodiments of the third example may comprise the first biasing member 308 integrally formed with the rear frame 303. The first biasing member 308 is formed in a leaf-spring shape that projects from the side surface portion 33 of the rear frame 303 to the light-guide-plate 4 side. Moreover, the first biasing member 308 is disposed to abut the surface on the outer side (X1-direction side) of the mounting substrate installation portion 62 of the heat sink 6. While illustration thereof is omitted, the first biasing member 308, similarly to the first example, biases one heat sink 6 with two first biasing members 308.

Other configurations of the third example are similar to those of the first example.

According to one or more embodiments of the third example, effects such as below can be obtained.

According to one or more embodiments of the third example, similarly to the first example, by providing the heat sink 6 that fixedly holds the light source unit 5, the television device 300 can efficiently dissipate the heat from the light source unit 5 by the heat sink 6. Moreover, by providing the first spacer portion 72 that separates the incident end surface 4a and the light source unit 5 by the predetermined distance at the predetermined interval and providing the rear frame 303 that supports the heat sink 6 so that the heat sink 6 can move in the horizontal direction (X direction) orthogonal to the incident end surface 4a on the outer side of the heat sink 6, the configuration that moves the light source unit 5 and the heat sink 6 for holding the distance of the light source unit 5 and the light guide plate 4 constant can be simplified.

Furthermore, according to one or more embodiments of the third example, as above, the first biasing member 308 is integrally formed with the rear frame 303. Thus, the first biasing member 308 and the rear frame 303 are integrally formed; therefore, a device configuration may be simplified.

Other effects of one or more embodiments of the third example are similar to those of one or more embodiments of the first example.

### (Fourth example)

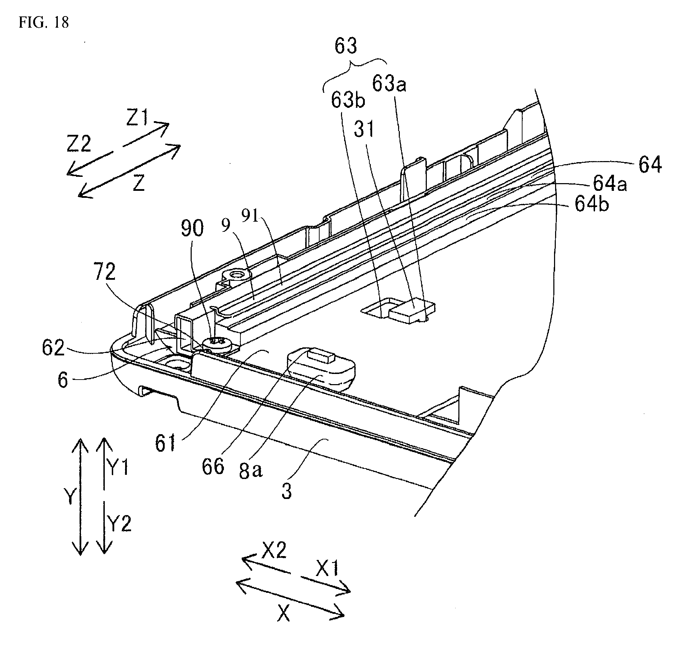

A television device 400 according to one or more embodiments of a fourth example of the present invention will be described with reference to FIGS. 1 to 20. Configurations similar to those of the first example will be illustrated labeled with reference signs identical to those of the first example, and description thereof will be omitted.

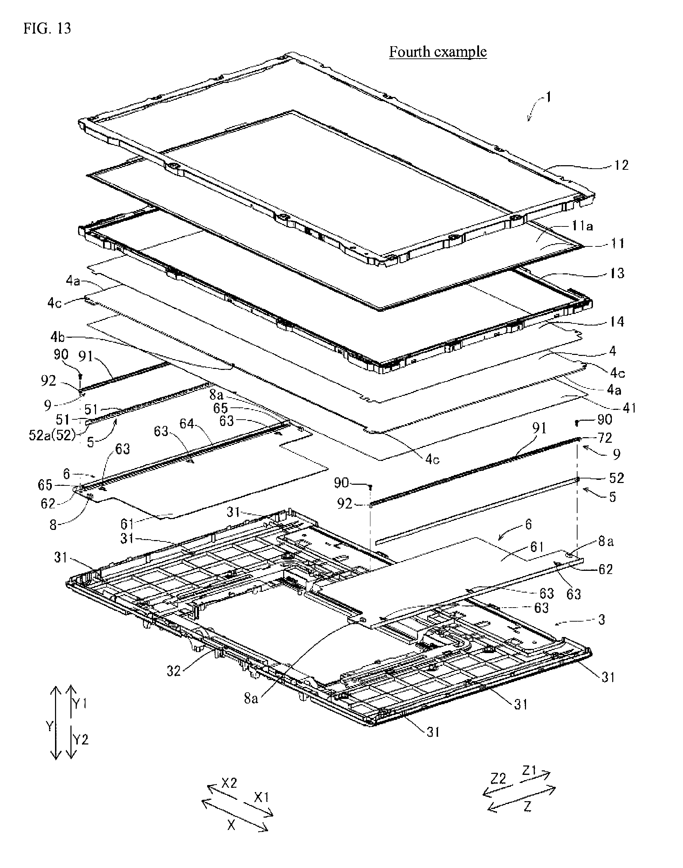

As illustrated in FIG. 13, the display module 1 comprises the liquid crystal cell 11 that includes the display surface 11a on the surface on the front side (Y1-direction side), the bezel 12 that holds the liquid crystal cell 11 from the front (Y1 direction), a mold frame 13 that holds the liquid crystal cell 11 from the rear (Y2 direction), various types of optical sheets 14, the light guide plate 4, the reflective sheet 41, the light source unit 5, the heat sink 6, and the plate-shaped fixing member 9. The liquid crystal cell 11 is an example of the "display unit" of the one or more embodiments of present invention. Moreover, the plate-shaped fixing member 9 is an example of a "fixing member" of one or more embodiments of the present invention.

The bezel 12 is installed to the mold frame 13 in the state of interposing the liquid crystal cell 11 from the front (Y1 direction) of the mold frame 13. The mold frame 13 is a frame-shaped member made of resin and, in addition to the liquid crystal cell 11, holds the optical sheet 14 on the back-surface side. Moreover, the mold frame 13 is disposed on the inner side of the front cabinet 2. The optical sheet 14 is a diffusion plate or another functional sheet and is provided in a plurality. The light source unit 5 is respectively provided near both end portions of the light guide plate 4 in the horizontal direction (X direction). The light guide plate 4 is disposed on the rear side (Y2-direction side) of the optical sheet 14. Moreover, the light guide plate 4 respectively includes the incident end surface 4a on both end portions in the horizontal direction (X direction). Moreover, the light guide plate 4 guides the light emitted from the light source unit 5 and incident from the incident end surface 4a of the light guide plate 4 to the liquid crystal cell 11.

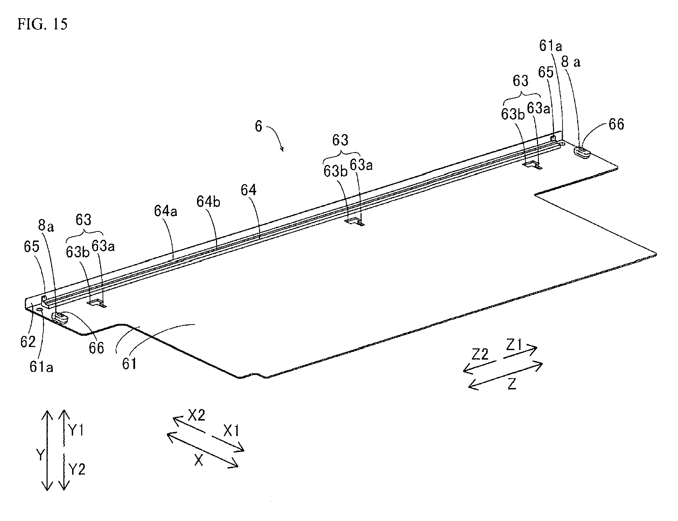

The incident end surface 4a of the light guide plate 4 is respectively provided on both end surfaces of the light guide plate 4 in the horizontal direction (X direction). Moreover, in the television device 400, the light source unit 5, the heat sink 6, and the plate-shaped fixing member 9 are respectively provided on both incidence-end-surface 4a sides. The reflective sheet 41 is disposed on the rear side (Y2-direction side) of the light guide plate 4 and reflects the light from the light source unit 5 to the light-guide-plate 4 side (liquid-crystal-cell 11 side). Moreover, the heat sink 6 is respectively provided near the light guide plate 4. Moreover, the heat sink 6 supports the light guide plate 4 and the reflective sheet 41 on the front-surface side (surface side in the Y1 direction) by a support portion 64 (see FIG. 15) that will be described below.

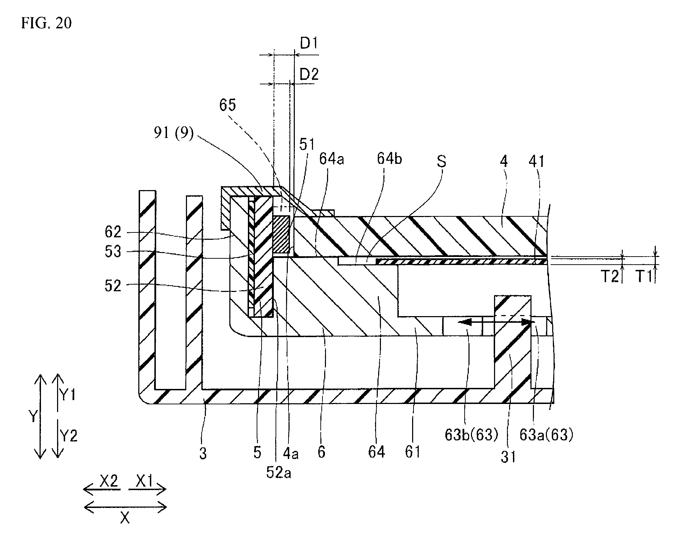

According to one or more embodiments of the fourth example, the plate-shaped fixing member 9 integrally fixes the incidence-end-surface 4a side of the light guide plate 4 and the heat sink 6 in the state where the distance between the incident end surface 4a of the light guide plate 4 and the light source unit 5 is maintained at the predetermined interval (D1 to D2) (see FIG. 20). Details will be described below.

This television device 400 is a liquid television device of the so-called edge-light type (side-light type) where the light source 5 is disposed on the end-portion side of the light guide plate 4. The light source units 5, the heat sinks 6, and the plate-shaped fixing members 9 on the X1-direction side and the X2-direction side have configurations similar to each other. Therefore, hereinbelow, for the light source unit 5, the heat sink 6, and the plate-shaped fixing member 9, the configuration on the X2-direction side will be described, and description of the configuration on the X1-direction side will be omitted. Moreover, hereinbelow, the side where the light source unit 5 on the X2-direction side of the light guide plate 4 is disposed is made to be the outer side (X2-direction side), and an opposite side thereof is made to be the inner side (X1-direction side).

The interval between the mounting substrate 52 and the light guide plate 4 (incident end surface 4a) is held constant (D1) (see FIG. 20) by a second spacer portion 65 (thickness D1) (see FIG. 20) of the heat sink 6 that will be described below.

As illustrated in FIG. 20, the LED 51 is disposed to line up in a plurality in the vertical direction (Z direction) on the mounting surface 52a on the X1-direction side of the mounting substrate 52. Moreover, the LED 51 and the light guide plate 4 (incident end surface 4a) is maintained at the predetermined interval (D1 to D2) by the interval between the mounting substrate 52 and the light guide plate 4 (incident end surface 4a) being held constant (D1). The predetermined interval (D1 to D2) is set to about 0.1 mm.

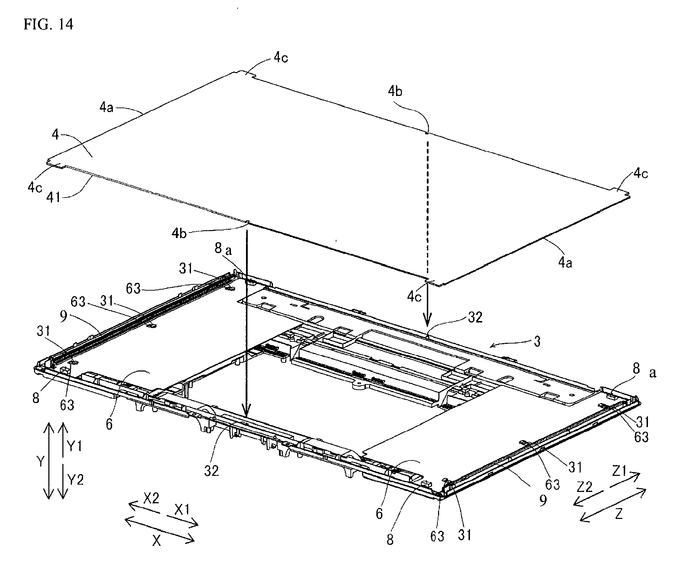

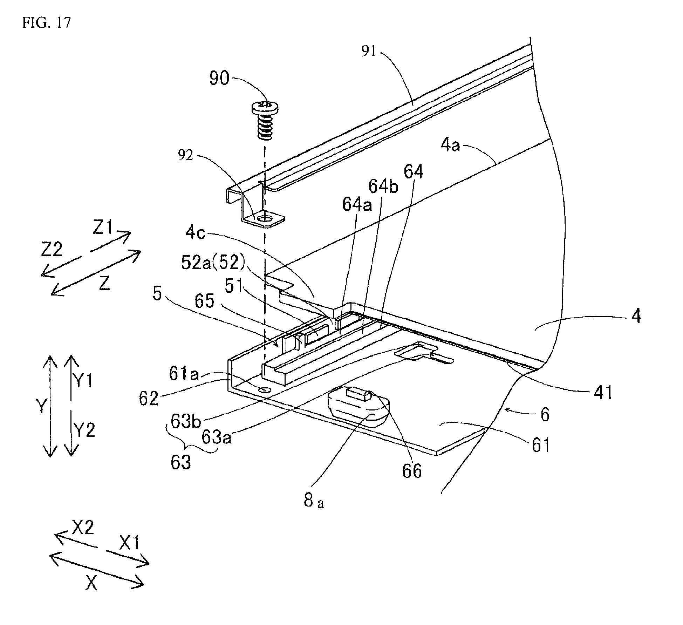

As illustrated in FIGS. 13 and 14, on the light guide plate 4, a convex portion 4c that projects in a lateral direction is respectively formed in both corners (four corner portions) on both end surfaces (Z-direction end surfaces) in the lateral direction. As illustrated in FIG. 17, this convex portion 4c is biased to the light-source-unit 5 side by a second biasing member 8a that will be described below installed to the heat sink 6.

Furthermore, as illustrated in FIG. 17, the heat sink 6 fixedly holds the light source unit 5. For example, the heat sink 6 includes the tabular portion 61 disposed parallel to the light guide plate 4 and the mounting substrate installation portion 62 that rises toward the front (Y1 direction) from the end portion of the tabular portion 61 on the outer side (X2-direction side) and to which the mounting substrate 52 is installed.

The mounting substrate installation portion 62 of the heat sink 6 is disposed on the outer side (X2-direction side) relative to the light source unit 5. Moreover, the mounting substrate installation portion 62 fixedly holds the mounting substrate 52 (light source unit 5) via the heat dissipating tape 53 (see FIG. 20) affixed on the surface on the inner side (surface on the X1-direction side).

As illustrated in FIG. 15, the heat sink 6 includes the support portion 64 disposed on the front side top surface (surface on Y1-direction side) of the tabular portion 61 of the heat sink 6 and the second spacer portion 65.

The support portion 64 of the heat sink 6 is formed in a rod shape extending in the vertical direction (Z direction) and is disposed near the mounting substrate installation portion 62. Moreover, as illustrated in FIGS. 17 and 20, the support portion 64 supports the light guide plate 4 and the reflective sheet 41 from the rear side (Y2-direction side). Moreover, the support portion 64, in a situation where the heat sink 6 moves, has the predetermined gap S (see FIG. 20) between itself and the reflective sheet 41 for preventing the end portion on the light-source-unit 5 side (outer side (X2-direction side)) of the reflective sheet 41 from abutting the support portion 64.

Furthermore, as illustrated in FIGS. 17 and 20, the support portion 64 includes a light guide plate support portion 64a that supports the light guide plate 4 and a reflective sheet support portion 64b that supports the reflective sheet 41 on the rear side (Y2-direction side) of the light guide plate support portion 64a. Moreover, as illustrated in FIG. 20, the difference T1 in height in the front and rear direction (Y direction) between the light guide plate support portion 64a and the reflective sheet support portion 64b is greater than the thickness T2 of the reflective sheet 41 in the front and rear direction (Y direction). Therefore, the reflective sheet 41 is positioned between the light guide plate 4 and the support portion 64 and not held in the state of being pressed in the front and rear direction (Y direction).

As illustrated in FIG. 15, the second spacer portion 65 of the heat sink 6 is formed in the tabular shape and is formed to project to the front (Y1 direction) from both end portions respectively of the support portion 64 of the rod shape. Moreover, as illustrated in FIG. 20, the second spacer portion 65 respectively contacts the mounting surface 52a on which the LED 51 of the mounting substrate 52 is mounted and the incident end surface 4a of the light guide plate 4 in the state where the light source unit 5 is installed to the heat sink 6. Moreover, the thickness D1 of the second spacer portion 65 corresponding to the gap in the horizontal direction (X direction) between the mounting surface 52a and the incident end surface 4a of the light guide plate 4 is greater than the thickness D2 of the LED 51 in the horizontal direction (X direction), and the incident end surface 4a of the light guide plate 4 and the LED 51 are separated in the state of being near the predetermined interval (D1 to D2). That is, the second spacer portion 65 holds the distance between the LED 51 and the light guide plate 4 (incident end surface 4a) so they do not abut each other by being formed thicker than the LED 51 in the horizontal direction (X direction).

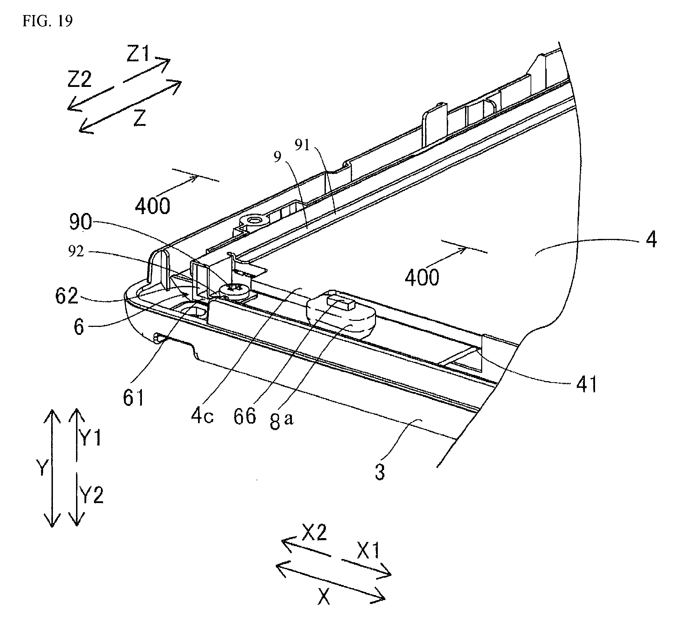

As illustrated in FIG. 19, the heat sink 6 includes a projecting portion 66 for installing the removable second biasing member 8a. The projecting portion 66 is formed to project forward (Y1 direction) from the tabular portion 61 of the heat sink 6. Moreover, the projecting portion 66 is disposed near the inner side (X1-direction side) end surface of the convex portion 4c of the light guide plate 4.

The second biasing member 8a is formed by an elastic material such as silicone. Moreover, the second biasing member 8a comprises a hole portion (not illustrated) for installation to the projecting portion 66. Moreover, the second biasing member 8a is fixedly installed to the heat sink 6 by inserting the projecting portion 66 into the hole portion. Moreover, the second biasing member 8a is compressed by abutting the inner side end surface (X1-direction side end surface) of the convex portion 4c of the light guide plate 4 during installation. As a result, the second biasing member 8a biases the incident end surface 4a of the light guide plate 4 toward a second-spacer-portion 65 side (toward the outer side (X2-direction side)). Thus, the television device 400 separates the incident end surface 4a of the light guide plate 4 and the light source unit 5 by the predetermined distance at the predetermined interval.

As illustrated in FIG. 17, the tabular portion 61 of the heat sink 6 has a screw hole 61a used to install the plate-shaped fixing member 9. The screw hole 61a is formed near the end portion of the mounting substrate installation portion 62 of the heat sink 6.

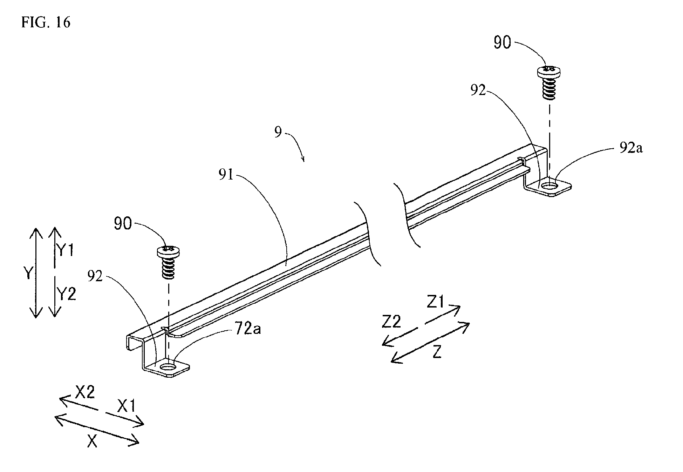

As illustrated in FIG. 16, the plate-shaped fixing member 9 comprises a long plate portion 91 of a plate shape extending in the vertical direction (Z direction) and an installation portion 92 used for installation to the heat sink 6 (see FIG. 17) provided on both end portions of the long plate portion 91. The installation portion 92 comprises a through hole 92a for disposing a screw 90. Moreover, as illustrated in FIGS. 17 and 20, the plate-shaped fixing member 9 is installed to the heat sink 6 in a state where the incidence-end-surface 4a side (portion near the end portion in the X direction) of the light guide plate 4 is positioned between the plate-shaped fixing member 9 and the heat sink 6. Thus, the plate-shaped fixing member 9 integrally fixes to each other the incidence-end-surface 4a side of the light guide plate 4 and the heat sink 6.

For example, as illustrated in FIG. 20, the long plate portion 91 of the plate-shaped fixing member 9 abuts the surface of the light guide plate 4 on the opposite side (Y1-direction side) of the surface of the light guide plate 4 abutting the heat sink 6. For example, a portion of the long plate portion 91 opposing the light guide plate support portion 64a in the Y direction abuts the front surface (surface on Y1-direction side) of the light guide plate 4. Moreover, the long plate portion 91 extends in the direction (Z direction) along the incident end surface 4a of the light guide plate 4. Moreover, the long plate portion 91 applies a pressing force to the light guide plate 4 in the state of being installed to the heat sink 6 via the installation portion 92. Moreover, the plate-shaped fixing member 9 integrally fixes the incident end surface 4a of the light guide plate 4 and the heat sink 6 by applying the pressing force to the heat-sink 6 side of the light guide plate 4. Thus, the light guide plate 4 and the heat sink 6 are integrally fixed in the state of being separated from each other at the predetermined interval (D1 to D2).

The long plate portion 91 of the plate-shaped fixing member 9 is provided across substantially an entire length (substantially an entire length of the incident end surface 4a) of the light guide plate 4 in the Z direction and covers the front-surface side region of the LED 51 and the incident end surface 4a. Thus, the plate-shaped fixing member 9 is reflects the light received from the light source unit 5 to the light-guide-plate 4 side. That is, the plate-shaped fixing member 9 also functions as a reflector.

Next, the movement of the heat sink 6 and the light source unit 5 in conjunction with the expansion and contraction of the light guide plate 4 will be described with reference to FIG. 20.

As described above, the light guide plate 4 is positioned on the rear frame 3 in the substantially central position in the longitudinal direction (X direction) by the engagement between the notched engagement portion 4b (see FIG. 14) and the convex engagement portion 32 (see FIG. 14) of the rear frame 3. Moreover, the incidence-end-surface 4a side of the light guide plate 4 and the heat sink 6 are integrally fixed. Moreover, the hook guide portion 31 of the rear frame 3 and the hole portion 63 of the heat sink 6 are engaged.

In this state, when the light guide plate 4 expands due to heat, as illustrated in FIG. 20, the incident end surface 4a on the X2-direction side moves to the outer side (X2-direction side) with the substantially central position in the longitudinal direction (X direction) as a reference. At this time, the rail portion 63a of the heat sink 6 is slid (guided) along the root portion of the hook guide portion 31 of the rear frame 3. Thus, the heat sink 6 and the light source unit 5 move in the X2 direction integrally with the incident end surface 4a. In the situation where the light guide plate 4 contracts, an operation in a reverse direction takes place.

According to one or more embodiments of the fourth example, effects such as below can be obtained.

According to one or more embodiments of the fourth example, as above, by providing the plate-shaped fixing member 9 for integrally fixing the incidence-end-surface 4a side of the light guide plate 4 and the heat sink 6 in the state where the distance between the incident end surface 4a and the light source unit 5 is maintained at the predetermined interval (D1 to D2) (see FIG. 20), the incidence-end-surface 4a side of the light guide plate 4 and the heat sink 6 are integrally fixed by the plate-shaped fixing member 9; therefore, even in the situation where the light guide plate 4 expands or contracts due to heat, the incident end surface 4a and the light source unit 5 can be separated by the predetermined distance at the predetermined interval. Thus, the incidence amount of the light to the light guide plate 4 can be stabilized; therefore, the television device 400 according to one or more embodiments of the fourth example may improve the usage efficiency of the light.

According to one or more embodiments of the fourth example, as above, the rear frame 3 that supports the heat sink 6 so that the heat sink is movable in the horizontal direction orthogonal to the incident end surface 4a of the light guide plate 4 is provided, and the heat sink 6 moves relative to the rear frame 3 while being separated at the predetermined interval in conjunction with the movement of the incident end surface 4a in the horizontal direction due to the expansion or contraction of the light guide plate 4. Thus, in the situation where the light guide plate 4 expands or contracts due to heat, the heat sink 6 on the incidence-end-surface 4a side of the light guide plate 4 can be stably moved relative to the rear frame 3.

According to one or more embodiments of the fourth example, as above, by the plate-shaped fixing member 9 being installed to the heat sink 6 so that the incidence-end-surface 4a side of the light guide plate 4 is positioned between the plate-shaped fixing member 9 and the heat sink 6, the incidence-end-surface 4a side of the light guide plate 4 and the heat sink 6 are integrally fixed to each other. Thus, in the state where the light guide plate 4 is positioned by the plate-shaped fixing member 9 and the heat sink 6, the heat sink 6 and the light guide plate 4 are fixed; therefore, the heat sink 6 and the light guide plate 4 can be stably and integrally fixed.

According to one or more embodiments of the fourth example, as above, the second spacer portion 65 that is disposed between the incident end surface 4a of the light guide plate 4 and the light source unit 5 and separates the incident end surface 4a and the light source unit 5 by the predetermined distance at the predetermined interval, and the second biasing member 8a that biases the incident end surface of the light guide plate 4 toward the second-spacer-portion 65 side are provided. Thus, in the state where the heat sink 6 that fixedly holds the light source unit 5 and the incidence-end-surface 4a side of the light guide plate 4 are integrally fixed by the plate-shaped fixing member 9, the incident end surface 4a of the light guide plate 4 is biased toward the second-spacer-portion 65 side by the second biasing member 8a; therefore, the function of the spacer that separates the incident end surface 4a of the light guide plate 4 and the light source unit 5 by the predetermined distance at the predetermined interval can be reliably exhibited.

According to one or more embodiments of the fourth example, as above, by providing the plate-shaped fixing member 9 that abuts the surface of the light guide plate 4 on the opposite side of the surface of the light guide plate 4 abutting the heat sink 6 and extends in the direction along the incident end surface 4a of the light guide plate 4, and applying the pressing force on the heat-sink 6 side of the light guide plate 4, the plate-shaped fixing member 9 integrally fixes the incidence-end-surface 4a side of the light guide plate 4 and the heat sink 6. Thus, the plate-shaped fixing member 9 can be made to reliably make surface contact with the light guide plate 4; therefore, the fixed state between the incidence-end-surface 4a side of the light guide plate 4 and the heat sink 6 can be further stabilized.

### (Fifth Example)

Next, a fifth example will be described with reference to FIGS. 1, 21, and 22. In this fifth example, unlike the fourth example where the light guide plate 4 and the heat sink 6 are integrally fixed by the plate-shaped fixing member 9 of the plate shape and the screw 90, an example will be described where the light guide plate 4 and a heat sink 206 are integrally fixed by a wedge-shaped fixing spacer member 207. The fixing spacer member 207 is an example of the "fixing member" of one or more embodiments of the present invention. Moreover, configurations similar to those of the first example and the fourth example will be illustrated labeled with reference signs identical to those of the first example and the fourth example, and description thereof will be omitted.

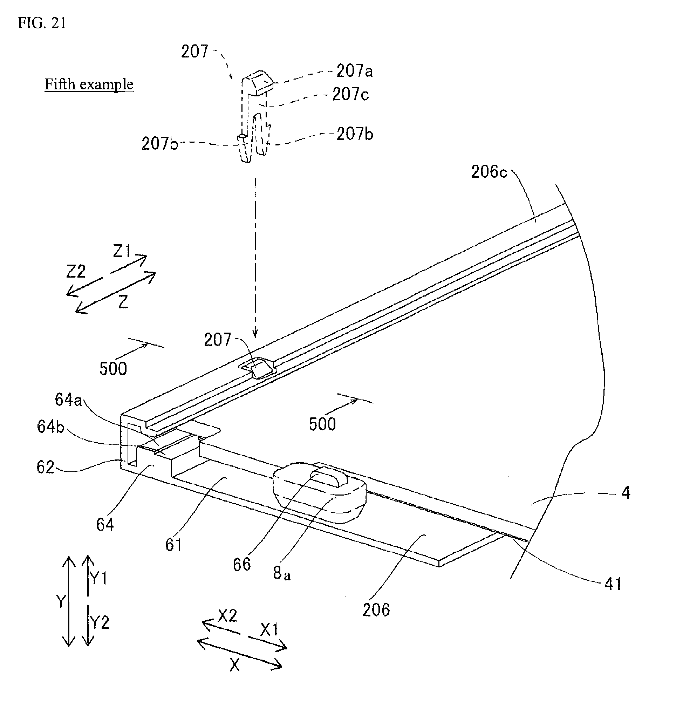

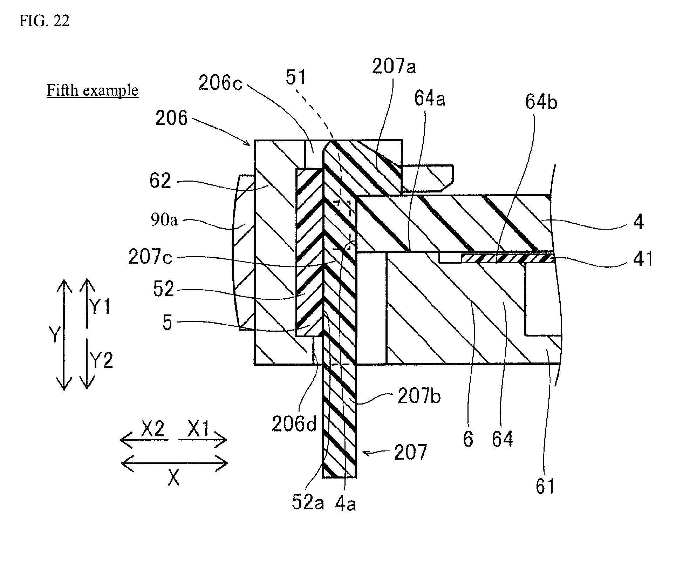

As illustrated in FIGS. 21 and 22, a television device 500 according to one or more embodiments of the fifth example (see FIG. 1) may comprise the heat sink 206 and the fixing spacer member 207. The television device 500 is an example of the "display device" of the one or more embodiments of present invention.

An end portion 206c of the heat sink 206 is formed in a U shape to cover the incident end surface 4a (see FIG. 20) of the light guide plate 4 and an upper surface (front surface (surface on Y1-direction side)) near the incident end surface 4a. Moreover, the U-shaped end portion 206c is formed to extend to an inner side (X1-direction side) from the front end portion (Y1-direction end portion) of the mounting substrate installation portion 62. Moreover, a tip of the U-shaped end portion 206c is disposed on the front side (Y1-direction side) of the light source unit 5. Therefore, the tip of the U-shaped end portion 206c functions as a reflector that reflects the light heading in the Y1 direction from the light source unit 5. Moreover, the heat sink 206 includes an opening portion 206d (see FIG. 22) that penetrates the tabular portion 61 in the Y direction near the mounting substrate installation portion 62. Moreover, the heat sink 206 is screwed to the light source unit 5 from the outer side (X2-direction side) of the mounting substrate installation portion 62 by a screw 90a. Moreover, while not illustrated, four opening portions 206d are provided separated at predetermined distances in the Z direction. Moreover, the heat sink 206, unlike the fourth example, does not include a spacer portion.

The fixing spacer member 207 is inserted into the opening portion 206d of the heat sink 206. Moreover, the fixing spacer member 207 comprises a fourth engagement portion 207a that engages with the front surface on the Y1-direction side of the light guide plate 4 on the incidence-end-surface 4a side and a fifth engagement portion 207b that engages with the rear surface on the Y2-direction side of the tabular portion 61. The fourth engagement portion 207a is disposed on the front side (Y1-direction side). Moreover, the fourth engagement portion 207a is formed to project to the inner side (X1-direction side) to engage with the front surface of the light guide plate 4. The fifth engagement portion 207b is disposed on the rear side (Y2-direction side). Moreover, the fifth engagement portion 207b is formed in a forked shape divided in the vertical direction (Z direction) and is formed to respectively project to the upper and lower direction sides (Z1-direction side and Z2-direction side) to engage with the rear surface of the heat sink 206.

Furthermore, the fixing spacer member 207 engages the fifth engagement portion 207b with the heat sink 206 and the fourth engagement portion 207a with the light guide plate 4 by being inserted into the opening 206d of the heat sink 206. As a result, the fixing spacer member 207 integrally fixes the incidence-end-surface 4a side of the light guide plate 4 and the heat sink 206.

Furthermore, the fixing spacer member 207 includes a spacer portion 207c that links the fourth engagement portion 207a and the fifth engagement portion 207b. A horizontal direction (X direction) of the spacer portion 207c is a thickness direction of the spacer portion 207c. Moreover, one surface of the spacer portion 207c abuts the incident end surface 4a of the light guide plate 4 and another surface of the spacer portion 207c abuts the mounting surface 52a of the LED 51. Therefore, the fixing spacer member 207 also functions as a member that separates the incident end surface 4a of the light guide plate 4 and the light source unit 5 by a predetermined distance at a predetermined distance.

Other configurations of one or more embodiments of the fifth example are similar to those of the first example.

According to one or more embodiments of the fifth example, effects such as below can be obtained.

According to one or more embodiments of the fifth example, similarly to the fourth example, by providing the fixing spacer member 207 for integrally fixing the incidence-end-surface 4a side of the light guide plate 4 and the heat sink 206 in the state where the distance between the incident end surface 4a and the light source unit 5 is maintained at the predetermined interval, the usage efficiency of light of the television device 500 may be improved.

According to one or more embodiments of the fifth example, as above, a configuration is such that the fourth engagement portion 207a is engaged with the heat sink 206 by inserting the fixing spacer member 207 into the opening portion 206d of the heat sink 206 and the incidence-end-surface 4a side of the light guide plate 4 and the heat sink 206 are integrally fixed by engaging the fifth engagement portion 207b with the light guide plate 4. Thus, by merely inserting the fixing spacer member 207 into the opening portion 206d of the heat sink 206, the fourth engagement portion 207a and the fifth engagement portion 207b respectively engage with the heat sink 206 and the light guide plate 4; therefore, the heat sink 206 and the light guide plate 4 can be easily engaged. Moreover, the heat sink 206 and the light guide plate 4 are engaged by the fixing spacer member 207 itself; therefore, a member for installing the fixing spacer member 207 (for example, a screw) can be eliminated.

Furthermore, According to one or more embodiments of the fifth example, as above, the fixing spacer member 207 also functions as the spacer portion 207c. Thus, the fixing spacer member 207 can be made to also function as the spacer portion 207c; therefore, compared to a configuration where the fixing spacer member 207 and the spacer portion 207c are provided separately, a component count may be reduced.

Furthermore, according to one or more embodiments of the fifth example, as above, the end portion of the heat sink 206 is formed in the U shape to cover the incident end surface 4a of the light guide plate 4 and the upper surface (front surface (surface on Y1-direction side)) near the incident end surface 4a. Thus, the incident end surface 4a of the light guide plate 4 and the upper surface (front surface (surface on Y1-direction side)) near the incident end surface 4a are covered by the U-shaped end portion 206c of the heat sink 206; therefore, the end portion 206c of the heat sink 206 can be made to also function as a reflector that reflects the light from the light source unit 5 toward the light guide plate 4. Thus, the usage efficiency of the light may be further improved.

Other effects of one or more embodiments of the fifth example are similar to those of the fourth example.

### (Sixth example)

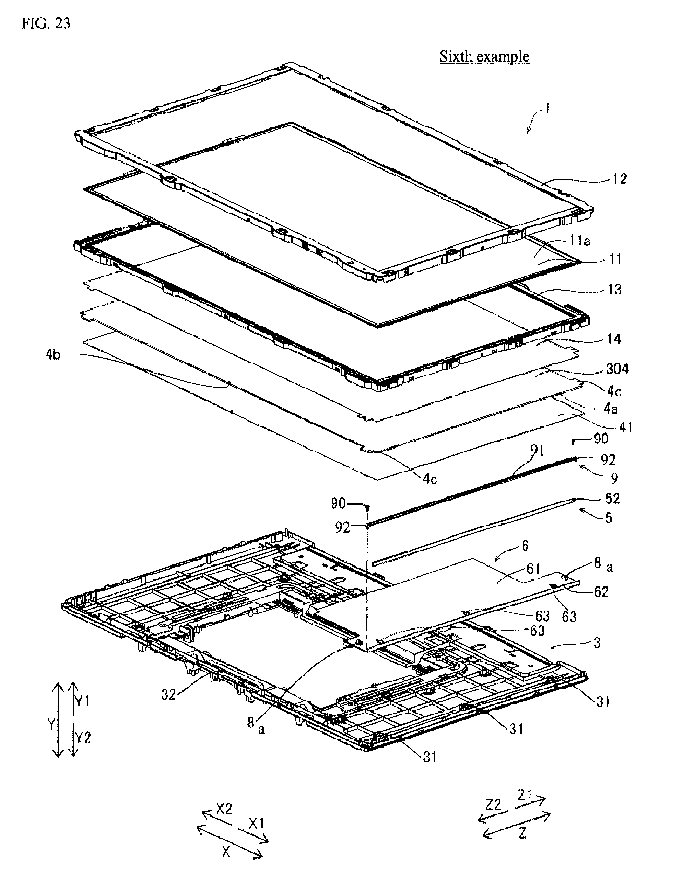

Next, a sixth example will be described with reference to FIGS. 1 and 23. In this sixth example, unlike the fourth example where the light source unit 5 is respectively provided on both end surfaces (X1-direction side end surface and X2-direction side end surface) of the light guide plate 4 in the horizontal direction, an example will be described where the light source unit 5 is provided on only one end surface (X1-direction side end surface) of a light guide plate 304 in the horizontal direction. Configurations similar to those of the fourth example will be illustrated labeled with reference signs identical to those of the fourth example, and description thereof will be omitted.

As illustrated in FIG. 23, in a television device 600 (see FIG. 1) according to one or more embodiments of the sixth example, the incident end surface 4a of the light guide plate 304 is provided only on one end surface (X1-direction side end surface) of the light guide plate 304 in the horizontal direction (X direction). Moreover, in the television device 600, the light source unit 5, the heat sink 6, and the plate-shaped fixing member 9 are provided on the incidence-end-surface 4a side in the X1 direction. Moreover, in the television device 600, the light source unit 5, the heat sink 6, and the plate-shaped fixing member 9 are not provided on the on the X2-direction side. The television device 600 is an example of the "display device" of one or more embodiments of the present invention.

Other configurations of one or more embodiments of the sixth example are similar to those of the fourth example.

According to one or more embodiments of the sixth example, effects such as below can be obtained.

According to one or more embodiments of the sixth example, similarly to the fourth example, by providing the plate-shaped fixing member 9 for integrally fixing the incidence-end-surface 4a side of the light guide plate 304 and the heat sink 6 in the state where the distance between the incident end surface 4a and the light source unit 5 is maintained at the predetermined interval, the usage efficiency of light of the television device 600 may be improved.

Other effects of one or more embodiments of the sixth example are similar to those of the fourth example.

### (Seventh example)

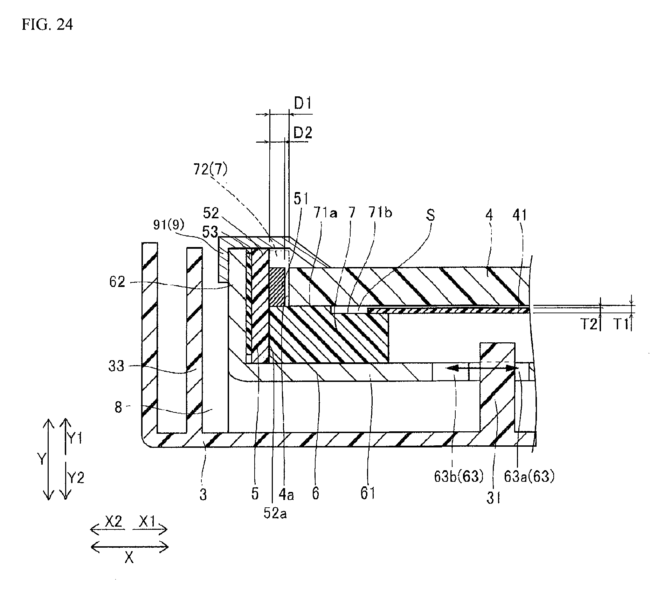

For example, the television device of one or embodiments of the first example may be provided with the plate-shaped fixing member 9. According to one or more embodiments of the seventh example, as illustrated in FIG. 24, a configuration is such that the incidence-end-surface 4a side of the light guide plate 4 and the heat sink 6 are integrally fixed in the state where the distance between the incident end surface 4a of the light guide plate 4 and the light source unit 5 is maintained at the predetermined interval (D1 to D2) (see FIG. 24).

One or more embodiments herein disclosed are examples on all counts and should not be considered limiting. Also, the features of these embodiments can be combined with each other according to various combinations, not limited to the specific combinations disclosed herein. The scope of the present invention is indicated not by the above description of the embodiments but by the scope of the appended claims.

For example, in the first to seventh examples, one or more embodiments are illustrated where the present invention is applied as a television device, but one or more embodiments of the present invention may be applied as a display device other than a television device.

Furthermore, in the first to seventh examples, one or more embodiments are illustrated where positioning of the light guide plate in the X direction is performed by the convex engagement portion of the rear frame and the notched engagement portion of the light guide plate, but the present invention is not limited thereto. According to one or more embodiments, the rear frame and the light guide plate respectively do not need to be provided with the convex engagement portion and the notched engagement portion. Moreover, the convex engagement portion of the rear frame and the notched engagement portion of the light guide plate may be provided in a position other than the central position in the X direction.

Furthermore, in the first, second, and fourth to seventh examples, one or more embodiments are illustrated where the biasing member is formed by a block-shaped elastic material, and in the third example, an example is illustrated where the biasing member is formed by a leaf spring, but the present invention is not limited thereto. According to one or more embodiments, the biasing member does not need to be formed by the block-shaped elastic member or the leaf spring. For example, the biasing member may be formed by a coil spring.

Furthermore, in the first to seventh examples, one or more embodiments are illustrated where a number of biasing members is two for every one heat sink, but the present invention is not limited thereto. According to one or more embodiments, the number of biasing members may be one or three or more relative to one heat sink.

Furthermore, in the first to seventh examples, one or more embodiments are illustrated where the end surface in the horizontal direction of the light guide plate is made to be the incident end surface, but the present invention is not limited thereto. According to one or more embodiments, the end surface of the light guide plate in the lateral direction may be made to be the incident end surface.

Furthermore, in the third example, one or more embodiments are illustrated where the biasing member and the rear frame are integrally formed, but the present invention is not limited thereto. According to one or more embodiments, the biasing member and the heat sink may be integrated.

Furthermore, in the first to third examples, one or more embodiments are illustrated where the heat sink and the support spacer member are made to be separate, but the present invention is not limited thereto. According to one or more embodiments, the heat sink and the support spacer member may be integrated.

Furthermore, in the first to third examples, one or more embodiments are illustrated where the support portion and the spacer portion are provided in the support spacer member, but the present invention is not limited thereto. According to one or more embodiments, the support portion and the spacer portion may be provided in separate members.

Furthermore, in the first to seventh examples, one or more embodiments are illustrated where the rear frame itself becomes the casing that is exposed from the rear to the outside, but the present invention is not limited thereto. According to one or more embodiments, a casing (rear cabinet) that covers the rear frame from the rear of the rear frame may be further installed.

Furthermore, in the fourth, sixth, and seventh examples, one or more embodiments are illustrated where the light guide plate and the heat sink are integrally fixed by the plate-shaped fixing member, and in the fifth example, an example is illustrated where the light guide plate and the heat sink are integrally fixed by the fixing spacer member, but the present invention is not limited thereto. According to one or more embodiments, the light guide plate and the heat sink may be integrally fixed by, for example, a screw.

Furthermore, in the fourth, sixth, and seventh examples, one or more embodiments are illustrated where the heat sink, the support portion, and the spacer portion are integrated, but the present invention is not limited thereto. According to one or more embodiments, the heat sink, the support portion, and the spacer portion may be made to be separate.

### [Explanation of References]

- 3, 303: Rear frame
- 4, 204, 304: Light guide plate
- 4a: Incident end surface
- 4b: Notched engagement portion (first engagement portion)
- 5: Light source unit
- 6, 206: Heat sink
- 8, 308: First biasing member
- 8a: Second biasing member
- 9: Plate-shaped fixing member (fixing member)
- 11: Liquid crystal cell
- 31: Hook guide portion (guide portion)
- 32: Convex engagement portion (second engagement portion)
- 33: Side surface portion
- 51: LED (light source)
- 52: Mounting substrate
- 52a: Mounting surface
- 65: Second Spacer portion
- 71: Support portion
- 72: First Spacer portion
- 100, 200, 300, 400, 500, 600, 700: Television device (display device)
- 206c: End portion
- 206d: Opening portion
- 207: Fixing spacer member (fixing member)
- 207a: Fourth engagement portion
- 207b: Fifth engagement portion

## Claims

1. A display device, comprising:
a display unit (100-700);
a light source unit (5);
a light guide plate (4, 204, 304) that includes an incident end surface (4a) and guides the light incident from the incident end surface to the display unit;
a spacer portion (65, 72) that separates the light source unit (5) and the light guide plate (4, 204, 304) by a predetermined distance at a predetermined interval;
a heat sink (6, 206) that holds the light source unit (5); and
a rear frame (3, 303) that supports the heat sink (6, 206) so that the heat sink is movable in a direction orthogonal to the incident end surface (4a) of the light guide plate (4, 204, 304).

2. The display device according to claim 1, wherein the spacer portion is a first spacer portion (72) disposed between the incident end surface (4a) and the light source unit (5).

3. The display device according to claim 1 or 2, further comprising: a first biasing member (8, 308) that biases the light source unit (5) to a light-guide-plate side.

4. The display device according to any of claims 1 to 3, further comprising: a second biasing member (8a) that is fixed to the heat sink and biases the incident end surface (4a) of the light guide plate to a spacer portion side.

5. The display device according to any of claims 1 to 4, further comprising: a fixing member (9, 207) that suppresses movement of the light guide plate (4, 204, 304) in a direction parallel to the incident end surface (4a).

6. The display device according to claim any one of claims 1 to 5, wherein the rear frame (3, 303) supports the heat sink (6, 206) so that the heat sink is movable in a longitudinal direction of the light guide plate (4, 204, 304).

7. The display device according to any one of claims 1 to 6, further comprising: a support portion (64, 71) that supports a reverse-surface side end portion of the light guide plate (4, 204, 304), wherein
the reverse-surface side of the light guide plate is a rear side on an opposite side of a front side of the light guide plate on which the display unit (100-700) is disposed, and
the support portion (64, 71) is fixed to the heat sink (6, 206).

8. The display device according to claim 7, further comprising: a reflective sheet (41) disposed on a reverse-surface side of the light guide plate (4, 204, 304), wherein
an end portion of the reflective sheet (41) is disposed between the reverse-surface side end portion of the light guide plate and the support portion (64, 71).

9. The display device according to claim 8, wherein
the support portion (64, 71) comprises a reflective sheet mounting surface (64b, 71b) mounting the end portion of the reflective sheet and a light guide plate mounting surface (64a, 71a) mounting an end portion of the light guide plate (4, 204, 304) higher on the reverse-surface side of the light guide plate than the reflective sheet mounting surface (64b, 71b), and
a difference in height between the reflective sheet mounting surface (64b, 71b) and the light guide plate mounting surface (64a, 71a) is greater than a thickness of the reflective sheet (41).

10. The display device according to any one of claims 1 to 9, wherein the light guide plate (4, 204, 304) is positioned on the rear frame (3, 303) in a substantially central portion in the longitudinal direction.

11. The display device according to claim 10, wherein
the light guide plate (4, 204, 304) includes a first engagement portion (4b) formed on an end portion on a lateral-direction side in a substantially central position in the longitudinal direction, and
the rear frame (3, 303) includes a second engagement portion (32) configured for engaging with the first engagement portion (4b),.

12. The display device according to any one of claims 5 to 11, wherein the fixing member (9) is installed to the heat sink (6, 206) so that the light guide plate (4, 204, 304) is positioned between the fixing member (9) and the heat sink (6, 206).

13. The display device according to any one of claims 5 to 11, wherein
the fixing member comprises a fourth engagement portion (207a) that engages with the light guide plate (4, 204, 304), and a fifth engagement portion (207b) that engages with the heat sink (6, 206).

14. The display device according to claim 2, wherein the first spacer portion (72) includes a fixing member that suppresses movement of the light guide plate (4, 204, 304) in a direction orthogonal to a movement direction of the heat sink (6, 206).

15. The display device according to any one of claims 1 to 14, wherein an end portion (206c) of the heat sink (206) covers the incident end surface (4a) and a front surface of the light guide plate (4, 204, 304) near the incident end surface (4a).
